# EUROPEAN PATENT APPLICATION

(11) **EP 3 822 582 A1**
(43) Date of publication of application: **19.05.2021**
(21) Application number: 18926069.8
(22) Date of filing: 11.07.2018
(51) Int. Cl.: G01C 21/28, G08G 1/00

(54) **DRIVING ENVIRONMENT INFORMATION GENERATION METHOD, DRIVING CONTROL METHOD, DRIVING ENVIRONMENT INFORMATION GENERATION DEVICE**

(71) Applicant: NISSAN MOTOR CO., LTD., Yokohama-shi, Kanagawa 221-0023 (JP); RENAULT s.a.s., 92100 Boulogne-Billancourt (FR)
(72) Inventor: FUJITA, Susumu, Atsugi-shi, Kanagawa 243-0123 (JP)
(74) Representative: Grünecker Patent- und Rechtsanwälte PartG mbB
(86) International application number: PCT/IB2018/000818
(87) International publication number: WO 2020/012208

(57) **Abstract**

Processor (11) acquires first information regarding a surrounding travel environment including a travel lane of another vehicle via a communication device (3). The first information is based on detection information from sensors (220, 260) equipped in the other vehicle. The processor (11) associates identification information of the lane with the acquired first information and accumulates the first information in a storage device (20). The processor (11) refers to map information (21) stored in the storage device (20) to acquire second information regarding lanes of a road. The processor (11) calculates a difference regarding a common lane between the first information and the second information and composites the first information and the second information on the basis of the difference to generate travel environment information (24).

## Description

### [Technical Field]

The present invention relates to a method of generating travel environment information that is referred to in driving control, a driving control method, and a travel environment information generation apparatus.

### [Background Art]

A technique is known, which includes extracting difference information between three-dimensional information detected around a vehicle by an onboard sensor and three-dimensional map information and correcting the three-dimensional information detected in the onboard sensor if a determination is made that the difference information is attributable to an intrinsic difference derived from the onboard sensor arrangement or the like, such as the mounting position of the onboard sensor (Patent Document 1).

### [Prior Art Document]

### [Patent Document]

[Patent Document 1] WO2016/027394

### [Summary of Invention]

### [Problems to be solved by Invention]

In the above conventional technique, if the extracted difference information is information on a difference intrinsic to the vehicle, correction information intrinsic to the vehicle is generated for correcting the three-dimensional information around the vehicle, but nothing is studied for the use of detection information from an onboard sensor of another vehicle when correcting the map information.

A problem to be solved by the present invention is to generate travel environment information by appropriately using the detection information from another vehicle.

### [Means for solving problems]

The present invention solves the above problem through accumulating, for each lane, first information based on detection information from an onboard sensor of another vehicle, acquiring second information included in map information that is preliminarily stored, calculating a difference regarding a common lane between the first information and the second information, and compositing the first information and the second information on the basis of the difference to generate travel environment information.

### [Effect of Invention]

According to the present invention, the first information based on the detection information from another vehicle and the second information based on the preliminarily stored map information are composited to generate the travel environment information, and the travel environment information which reflects the actual situation of lanes can therefore be generated.

### [Brief Description of Drawings]

FIG. 1 is a block diagram of a driving control system according to one or more embodiments of the present invention.
FIG. 2 is a diagram illustrating an example of first information according to one or more embodiments of the present invention.
FIG. 3A is a set of diagrams for describing a case in which misalignment occurs between a travel lane and a target lane.
FIG. 3B is a set of diagrams for describing an example of a connecting process for the travel lane and the target lane.
FIG. 4 is a set of diagrams for describing an example of a process of generating travel environment information.
FIG. 5A is a first diagram for describing a compositing process.
FIG. 5B is a second diagram for describing the compositing process.
FIG. 5C is a third diagram for describing the compositing process.
FIG. 6A is a set of diagrams for describing specific roads.
FIG. 6B is diagram for describing a road (non-specific road) that is not a specific road.
FIG. 7 is a flowchart illustrating a control procedure executed by the driving control system according to one or more embodiments of the present invention.
FIG. 8 is a flowchart illustrating a subroutine of step S7 of the control procedure illustrated in FIG. 7.

### [Mode(s) for Carrying out the Invention]

Hereinafter, one or more embodiments of the present invention will be described with reference to the drawings. In the embodiments, the present invention will be described by exemplifying a case in which the method of generating travel environment information and the travel environment information generation apparatus according to the present invention are applied to a driving control system.

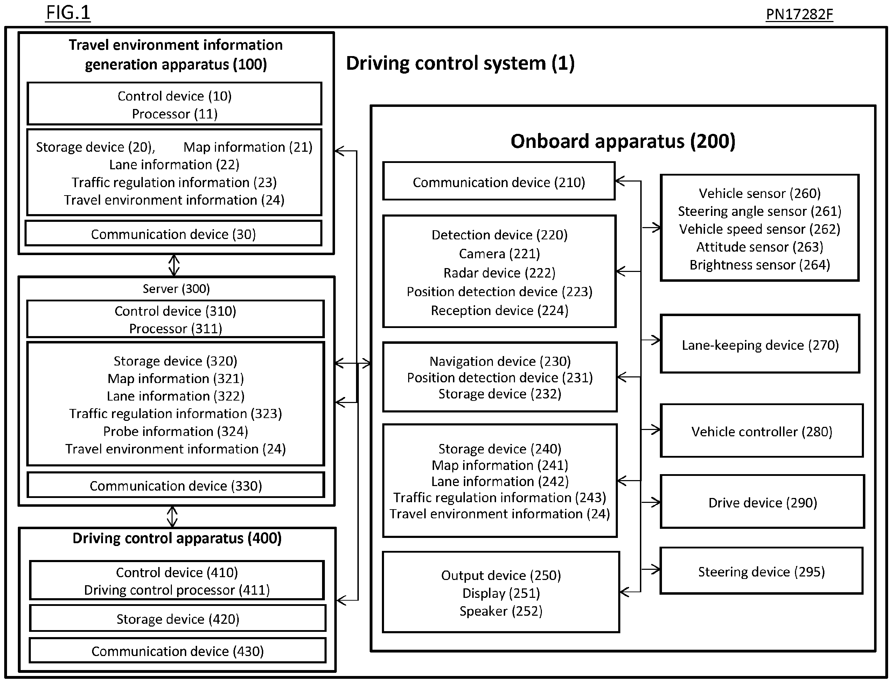

FIG. 1 is a diagram illustrating the block configuration of a driving control system 1. The driving control system 1 according to one or more embodiments of the present invention includes a travel environment information generation apparatus 100, an onboard apparatus 200, and a driving control apparatus 400. The driving control system 1 further includes a server 300 with which the travel environment information generation apparatus 100 can exchange information via a communication device 30. The driving control system 1, the travel environment information generation apparatus 100, the onboard apparatus 200, the server 300, the driving control apparatus 400, and various modules provided therein may each be a computer that includes a computing device, such as one or more CPUs, and executes calculation processes. One or more embodiments of the present invention will be described by exemplifying the driving control system which is configured such that the travel environment information generation apparatus 100 exchanges information with and cooperates with the onboard apparatus 200 equipped in a vehicle, the server 300, and the driving control apparatus 400 via the communication device 30.

The travel environment information generation apparatus 100 can have a configuration in which hardware such as a processor 11 and a storage device 20 is distributed and arranged in separate devices. Also regarding the processor 11, the function of executing each process may be executed by processors of different devices. The processor of each device executes each process on the basis of a command from the processor 11 of the travel environment information generation apparatus 100. The travel environment information generation apparatus 100 may use the driving control apparatus 400, the onboard apparatus 200, and/or the server 300 to execute a part of processes.

The onboard apparatus 200 will be described.

The onboard apparatus 200 acquires detection information regarding a subject vehicle and the situation around the subject vehicle and outputs the acquired detection information to the outside. The onboard apparatus 200 controls the subject vehicle to travel autonomously, on the basis of a command from the driving control apparatus 400. The onboard apparatus 200 according to one or more embodiments of the present invention includes a communication device 210, a detection device 220, a navigation device 230, a storage device 240, an output device 250, a vehicle sensor 260, a lane-keeping device 270, a vehicle controller 280, a drive device 290, and a steering device 295.

The communication device 210 executes communication between the devices of the onboard apparatus 200 and communication with the external server 300. The devices which constitute the onboard apparatus 200 are connected to one another via a controller area network (CAN) or other onboard LAN (communication device 210) to mutually exchange information. The onboard apparatus 200 can exchange information with the travel environment information generation apparatus 100 and the driving control apparatus 400 via such an onboard LAN. The onboard apparatus 200 exchanges information with the external server 300 via the communication device 210 which performs wireless communication.

The detection device 220 acquires detection information around the vehicle which travels along a route. The detection device 220 of the vehicle recognizes the existence, position, and area of a travel lane in which the vehicle moves, and detects the existence, existing positions, and existing areas of objects including obstacles that exist around the travel lane. Although not particularly limited, the detection device 220 includes a camera 221. The camera 221 is, for example, an imaging device including an imaging element such as a CCD. The camera 221 may also be an infrared camera or a stereo camera. The camera 221 is disposed at a certain position of the vehicle and captures images of lane markers of a travel lane for the vehicle and objects around the vehicle. The term "around the vehicle" as used herein encompasses the concepts of "ahead of the vehicle," "behind the vehicle," "sideways ahead of the vehicle," and "sideways behind the vehicle." Objects include two-dimensional signs such as lane markers and stop lines painted on the road surface. Objects include three-dimensional physical objects. Objects include stationary objects such as traffic signs. Objects include moving objects such as pedestrians, two-wheel vehicles, and four-wheel vehicles (other vehicles). Objects include road structures that include traffic strips such as guardrails and curbstones, traffic signals, signs, and display devices.

The detection device 220 analyzes the image data and, on the basis of the analysis results, recognizes the existence, positions, and areas of the travel lane in which the vehicle travels and lanes in the vicinity thereof. The detection device 220 recognizes the presence or absence, positions, and types of lane markers of the travel lane. The detection device 220 recognizes the existence, positions, occupied areas, and types of objects.

The detection device 220 includes a radar device 222. Examples of the radar device 222 for use include those, such as millimeter-wave radar, laser radar, ultrasonic radar, and a laser rangefinder, which are of schemes known at the time of filing of the present application. The detection device 220 detects the presence or absence of objects, positions of the objects, and distances to the objects on the basis of the received signals from the radar device 222. The detection device 220 detects the presence or absence of objects, positions of the objects, and distances to the objects on the basis of the clustering results of point cloud information which the radar device acquires.

The detection results from the detection device 220 of each vehicle are transmitted to the travel environment information generation apparatus 100 or the server 300 via the communication device 210. Such vehicles include the subject vehicle which is the control target and other vehicles than the subject vehicle. The other vehicles include vehicles other than the vehicles in which the autonomous travel control is being executed. In other words, the subject vehicle associated with the past travel history of the subject vehicle which is the control target is also included in the other vehicles in one or more embodiments of the present invention. The travel environment information generation apparatus 100 can also command the onboard apparatus 200 to transmit the detection results to the server 300. On the basis of the detection results, the detection device 220 may generate first information regarding the surrounding travel environment including a travel lane that is a lane in which each vehicle travels and transmit the first information to the travel environment information generation apparatus 100 (or the server 300). Under the control executed by the travel environment information generation apparatus 100, the server 300 manages the detection information from each vehicle or the first information as so-called probe information 324.

The detection device 220 may include a position detection device 223. In one or more embodiments of the present invention, the detection results from a position detection device 231 of the navigation device 230 are acquired as positional information of the first information. The positional information of the first information may be referred to as a detection position at which the detection information is acquired or an acquisition position at which the first information is acquired.

The detection device 220 may acquire information on a travel lane or a road including the travel lane as detection information from an external device of the Intelligent Transport System (ITS) via the communication device 210 and transmit the acquired information to the travel environment information generation apparatus 100 (or the server 300).

The detection device 220 outputs the detection results to the travel environment information generation apparatus 100, the server 300, and/or the driving control apparatus 400 in response to a request. In one or more embodiments of the present invention, under the control executed by the travel environment information generation apparatus 100, the detection device 220 sequentially outputs the first information to the server 300.

The detection device 220 of another vehicle performs the process of transmitting the first information to the server 300, but the detection device 220 of the subject vehicle which is the target of the travel control can also perform the process of acquiring the first information from the server 300. When the server 300 collects and accumulates the detection information from a plurality of vehicles, the detection device 220 can also acquire the detection information detected by another vehicle from the server 300. The detection device 220 of the subject vehicle can determine the accuracy of the detection information detected by the subject vehicle, on the basis of the difference from the detection information detected by another vehicle.

The navigation device 230 calculates the route from the current position of the vehicle to a destination using a scheme known at the time of filing of the present application. The calculated route is transmitted to the driving control apparatus 400 and/or the vehicle controller 280 for the use in the driving control for the vehicle. The calculated route is output as route guidance information via the output device 250, which will be described later. The navigation device 230 includes a position detection device 231. The position detection device 231 includes a receiver of the Global Positioning System (GPS) and detects a traveling position (latitude/longitude/map coordinate values) of the vehicle which is traveling. The current positional information is transmitted to the processor 11 as the detection information. Additionally or alternatively to the received signals from positioning satellites, odometry information or information from an orientation sensor or the vehicle sensor 260 may be used for calculation of the positional information. The current position when the detection information is acquired is included in the first information as the detection position. The current position when the first information is acquired is included in the first information as the acquisition position.

The navigation device 230 accesses the storage device 240 and refers to map information 241, lane information 242, and traffic regulation information 243. The navigation device 230 specifies the travel lane in which the vehicle travels, on the basis of the current position of the vehicle detected by the position detection device 231. The lane information 242 includes identification information for specifying the lane. The travel lane may be a part of the route to a destination that is designated by the user or may also be a part of the route to a destination that is estimated based on the travel history of the vehicle/user. The navigation device 230 refers to the map information 241 and the like to specify the travel lane in which the vehicle travels.

The map information 241 is high-definition digital map information (high-definition map, dynamic map). The map information 241 according to one or more embodiments of the present invention can be used in the driving control process executed by the driving control apparatus 400. The map information 241 includes second information, which will be described later. The driving control apparatus 400 can execute the driving control by referring to the map information 241 of the navigation device 230. It is not essential that the map information 241 is equipped in a vehicle, on the assumption that the communication environment is ensured. In the present specification, therefore, a configuration in which the map information may be provided is exemplified. The driving control apparatus 400 according to one or more embodiments of the present invention can use any of the map information 241 of the navigation device 230, map information 21 of the travel environment information generation apparatus 100, or map information 321 of the server 300 so long as the map information is provided by the travel environment information generation apparatus 100.

The output device 250 includes a display 251 and a speaker 252. The output device 250 outputs various information items regarding the driving control to the user or occupants of surrounding vehicles. The output device 250 outputs information regarding the amount of misalignment between the travel lane and the lane of the map information 241, the change content of the first information and/or the second information, the created driving action plan, and the driving control based on the driving action plan. The output device 250 may output various information items regarding the driving control to an external device of the Intelligent Transport System or the like via a communication device.

The vehicle sensor 260 has a steering angle sensor 261, a vehicle speed sensor 262, an attitude sensor 263, and a brightness sensor 264. The steering angle sensor 261 detects information such as a steering amount, a steering speed, and steering acceleration and outputs the detected information to the vehicle controller 280. The vehicle speed sensor 262 detects the speed and/or acceleration of the vehicle and outputs the detected speed and/or acceleration to the vehicle controller 280. The attitude sensor 263 detects the position of the vehicle, the pitch angle of the vehicle, the yaw angle of the vehicle, and the roll angle of the vehicle and outputs the detected values to the vehicle controller 280. The attitude sensor 263 includes a gyro sensor. The brightness sensor 264 detects the brightness around the vehicle. The brightness around the vehicle is used for calculation of the degree of reliability of the detection information.

The lane-keeping device 270 detects the travel lane from the images captured by the camera 221. The lane-keeping device 270 has a lane departure prevention function (lane-keeping support function) of controlling the movement of the vehicle so as to keep a certain relationship between the position of a lane marker of the lane and the position of the vehicle. The driving control apparatus 400 controls the movement of the vehicle so that the vehicle travels at a certain lateral position (e.g., the center) of the lane. The lane marker is not limited, provided that it has a function of defining a lane. The lane marker may be a line drawn on a road surface, a planting that exists between lanes, or a road structure that exists on the side of a road shoulder of a lane, such as a guardrail, a curbstone, a sidewalk, a traffic strip, or an exclusive road for two wheels. The lane marker may also be a stationary object that exists on the side of a road shoulder of a lane, such as an advertising display, a traffic sign, a store, or a roadside tree.

The vehicle controller 280 according to one or more embodiments of the present invention executes the driving control for the vehicle in accordance with the driving plan created by a driving control processor 411. The vehicle controller 280 operates the vehicle sensor 260, the drive device 290, and the steering device 295. The vehicle controller 280 acquires vehicle information from the vehicle sensor 260. The vehicle controller 280 according to one or more embodiments of the present invention is an onboard computer such as an electronic control unit (ECU) and electronically controls the driving/operation of the vehicle. The vehicle according to one or more embodiments of the present invention may be, for example, an electric car having an electric motor as the traveling drive source, an engine car having an internal-combustion engine as the traveling drive source, or a hybrid car having both an electric motor and an internal combustion engine as the traveling drive sources. Examples of the electric car or hybrid car having an electric motor as the traveling drive source include a type in which the power source for the electric motor is a secondary battery and a type in which the power source for the electric motor is a fuel cell. The content of control executed by the lane-keeping device 270 may be executed by the vehicle controller 280.

The drive device 290 according to one or more embodiments of the present invention includes a drive mechanism of the vehicle. The drive mechanism includes an electric motor and/or an internal-combustion engine as the above-described traveling drive sources, a power transmission device including a drive shaft and an automatic transmission that transmit the output of the traveling drive sources to the drive wheels, a braking device that brakes the wheels, and other necessary components. The drive device 290 generates respective control signals for these components of the drive mechanism and executes the driving control including acceleration/deceleration of the vehicle. These control signals for the drive mechanism are generated based on input signals by an accelerator operation and a brake operation and control signals acquired from the vehicle controller 280 or the driving control apparatus 400. Control information may be transmitted to the drive device 290, which can thereby perform the driving control including acceleration/deceleration of the vehicle in an automated or autonomous manner. In the case of a hybrid car, the drive device 290 may receive a ratio of the torque output to the electric motor and the torque output to the internal-combustion engine in accordance with the traveling state of the vehicle.

The steering device 295 according to one or more embodiments of the present invention includes a steering actuator. The steering actuator includes a motor and other necessary components attached to the steering column shaft. The steering device 295 executes the control of changing the traveling direction of the vehicle on the basis of a control signal acquired from the vehicle controller 280 or an input signal by the steering operation. The vehicle controller 280 transmits the control information including the steering amount to the steering device 295 thereby to execute the control of changing the traveling direction. Control of the drive device 290 and/or control of the steering device 295 may be performed in a completely automated or autonomous manner or in a form of assisting with the drive operation (traveling operation) by the driver. Control of the drive device 290 and control of the steering device 295 can be suspended/canceled due to an intervention operation by the driver.

The driving control apparatus 400 will then be described.

The driving control apparatus 400 includes a control device 410, a storage device 420, and a communication device 430. The driving control apparatus 400 may further include an output device. The output device serves in the same manner as the previously described output device 250 of the onboard apparatus 200. The control device 410 and the storage device 420 can exchange information with each other via a wired or wireless communication line. The communication device 430 performs information exchange with the onboard apparatus 200, information exchange inside the driving control apparatus 400, and information exchange between external devices and the driving control system 1.

The control device 410 includes a driving control processor 411. The driving control processor 411 is a computing device that performs a driving control process including the creation of a driving plan of the vehicle. Specifically, the driving control processor 11 is a computer including a read only memory (ROM) that stores programs for executing the driving control process including the creation of a driving plan, a central processing unit (CPU) as an operation circuit that executes the programs stored in the ROM to serve as the control device 410, and a random access memory (RAM) that serves as an accessible storage device.

In the driving control process, the control device 410 refers to travel environment information 24 generated by the travel environment information generation apparatus 100 at a predetermined processing cycle. The driving control processor 411 performs the driving control process using the generated travel environment information 24.

The travel environment information generation apparatus 100 will be described. The travel environment information generation apparatus 100 according to one or more embodiments of the present invention includes a control device 10, a storage device 20, and a communication device 30. The form of configuration of the travel environment information generation apparatus 100 according to one or more embodiments of the present invention is not limited, and a part of the configuration may be equipped in a vehicle and other parts may be provided in one or more other devices. The travel environment information generation apparatus 100 may be configured as a single piece of hardware and in a form of controlling the onboard apparatus 200, the driving control apparatus 400, and the server 300 to execute each process, but in one or more embodiments of the present invention, the travel environment information generation apparatus 100 is provided to be distributed over the communication network. A part of the configuration of the travel environment information generation apparatus 100 may be applied to a portable terminal device capable of exchanging information with the onboard apparatus 200, the driving control apparatus 400, and/or the server 300. Examples of the terminal device include devices such as a smartphone and a PDA.

The storage device 20 of the travel environment information generation apparatus 100 can be provided in the server 300. The travel environment information generation apparatus 100 communicates with a plurality of vehicles, controls each vehicle to transmit the first information to the server 300, and controls the server 300 to accumulate the first information.

The control device 10 includes a processor 11 that executes a process of generating the travel environment information 24. The processor 11 is a computing device having an information processing function of performing the process of generating the travel environment information 24.

The processor 11 is a computer including a read only memory (ROM) that stores programs for executing the process of generating the travel environment information 24, a central processing unit (CPU) as an operation circuit that executes the programs stored in the ROM to serve as the control device 10, and a random access memory (RAM) that serves as an accessible storage device. The control device 10 according to one or more embodiments of the present invention executes each function by cooperation of software for achieving the above functions and the above-described hardware.

The travel environment information generation apparatus 100 acquires the first information regarding the travel environment from another vehicle via the communication network. The first information is information regarding a surrounding travel environment including a travel lane that is the lane in which another vehicle travels, which information is based on the detection information from sensors equipped in the other vehicle. Here, the sensors include the onboard detection device 220 and the vehicle sensor 260. Past first information of the subject vehicle can be used for the current travel control for the subject vehicle, so "other vehicles" include the current control target vehicle at the past time point. In one or more embodiments of the present invention, it is assumed that the traveling vehicles other than the subject vehicle which is the current control target are "other vehicles."

The control device 10 executes a process of acquiring the first information. The first information is information based on the detection information from a sensor equipped in another vehicle. The processor 11 accumulates the collected first information from each vehicle in the storage device 20 (or a storage device 320 of the server 300) so as to be associated with identification information of a lane. The first information accumulated by the processor 11 is used for generation of the travel environment information.

The onboard sensors includes the detection device 220 and the vehicle sensor 260. The detection information includes the images captured by the camera 221 of the detection device 220, which will be described later, and information obtained from the captured images. The detection information includes detection signals from the radar device 222 and information obtained from the detection signals. The detection information includes information regarding the behavior of the vehicle detected by the vehicle sensor 260. The detection information includes current positional information. The current positional information may be detected by the position detection device 223 of the detection device 220 or may also be detected by the position detection device 231 of the navigation device 230, which will be described later.

The onboard sensors includes a reception device 224 that receives the detection information provided by an external information provision system such as the Intelligent Transport System (ITS) using the communication device 210. The reception device 224 may acquire images captured by a camera device installed on a road via short-range wireless communication. The reception device 224 may acquire the detection information (including captured images) of another vehicle via short-range wireless communication. The detection information received by the reception device 224 equipped in another vehicle is used as the detection information at the current position of the other vehicle which travels.

The control device 10 identifies a "travel lane" that is the lane to which the current position of another vehicle belongs and in which the other vehicle travels. The travel lane can be identified based on the current position of another vehicle, and the traveling position in the travel lane can be specified. The position of the travel lane may be determined based on the coordinates of an image captured by the camera 221 and/or the vehicle position detected by the vehicle sensor 260. The travel lane may be specified based on the determination made by the navigation device 230.

The first information according to one or more embodiments of the present invention is information regarding the surrounding travel environment including the travel lane in which another vehicle travels, which information is based on the detection information from sensors equipped in the other vehicle. The sensors include the detection device 220, vehicle sensor 260, and position detection device 231 of each of other vehicles. The first information is information regarding the travel lane of a road in which another vehicle travels and the road including the travel lane. The information regarding the travel lane of the first information includes lane marker information that defines the travel lane. The first information is information regarding the travel lane and includes identification information of the travel lane. The first information is information regarding the road including the travel lane and includes identification information of the road including the travel lane. In the first information, the identification information of the travel lane and the identification information of the road including the travel lane are associated with each other. That is, when the travel lane is specified by the identification information, information regarding the road to which the travel lane belongs can be acquired. The first information includes not only information on lane markers but also information on objects existing on a road and around the road. For example, the first information includes information on the presence or absence/positions of a traffic signal, a sign, and a road structure. The position of a traffic signal with respect to the acquisition position (detection position) of the first information can be included in the first information. The first information can be coordinated for each lane and each detection position.

The first information includes information that affects the detection information from a sensor. For example, the first information includes any one or more of attribute information of a vehicle, acquisition conditions of the detection information, or a degree of reliability of the detection information.

The attribute information of a vehicle includes vehicle identification information, manufacturer information of the vehicle, vehicle type information, model year information of the vehicle, layout information (including three-dimensional positional information) of sensors equipped in the vehicle, model type information of sensors equipped in the vehicle, the number of sensors equipped in the vehicle, and accuracy information of sensors equipped in the vehicle.

The acquisition conditions are conditions when acquiring the detection information. The acquisition conditions include acquisition date and time and environment. The environment information as the acquisition conditions includes the brightness at the time of acquisition, the weather at the time of acquisition, the rainfall amount at the time of acquisition, and the snowfall amount at the time of acquisition.

The first information includes the degree of reliability of the detection information. The degree of reliability includes the number of times of traveling in a lane for which the first information is specified, the number of times the travel environment information is generated, how the frequency distribution of detection results is low (how the variation is small), etc.

When generating the travel environment information of the subject vehicle which is the target of travel control, it is preferred to use the detection information from another vehicle having the same attribute as that of the subject vehicle. This is because if the manufacturer, vehicle type, model year, sensor layout, and the like are different, the content of detection information is also different. In other words, if the manufacturer, vehicle type, model year, sensor layout, and the like are common, a determination can be made that the accuracy of the first information from another vehicle is high as the detection information of the subject vehicle. When generating the travel environment information of the subject vehicle, it is preferred to use the detection information from another vehicle acquired under a condition in which the acquisition condition is approximate to that for the subject vehicle. This is because the environment around the vehicle to be detected may have changed if the acquisition date and time is old. In addition, the detection information when the acquisition time is nighttime (brightness is low) may be different from the detection information when the acquisition time is daytime (brightness is high). The detection information differs also depending on the weather, rainfall amount, and snowfall amount at the time of acquisition. For the above reasons, the first information according to one or more embodiments of the present invention is made to include the attribute information and the acquisition condition. The first information can be narrowed down based on the attribute information and the acquisition condition. For example, when a request for the travel environment information is received from the subject vehicle which is the control target, the first information in the time slot including the time of receiving the request may be extracted and used to generate the travel environment information. The daytime detection result is used during the daytime, and the nighttime detection result is used during the nighttime.

By including the degree of reliability of the detection information in the first information, the degree of reliability of the detection information can be evaluated. When the number of times of traveling is large, the number of acquisition of the detection information increases, and it is therefore possible to obtain highly reliable detection information from which variations and the like are excluded. For example, the representative value (average value, median value, mode value) can be obtained based on a plurality of detection information pieces corresponding to the number of times of traveling. Likewise, for information for which the number of times the travel environment information is generated is large, the travel environment information is finally generated, and the degree of reliability of the first information can be evaluated based on the past record of use. Thus, the degree of reliability can be evaluated high for the first information having a large number of times of traveling (large number of samples) and the first information having a large number of times of use in the process of generating the travel environment information. The degree of reliability of the first information can be quantitatively evaluated using a value calculated based on the number of samples, the degree of dispersion, the degree of variation, etc.

Information obtained from each vehicle is sequentially accumulated in the storage device 320 of the server 300 as the probe information 324. The first information collected from other vehicles is also stored in the storage device 320 of the server 300.

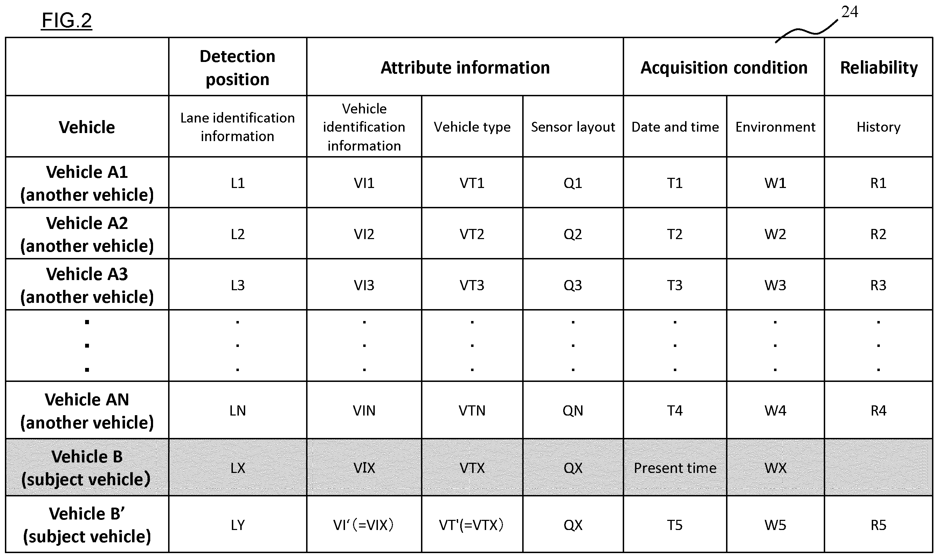

FIG. 2 illustrates an example of the probe information 324 including the first information.

As illustrated in FIG. 2, the first information is collected from the onboard apparatus 200 of each of vehicles A1 to AN. The first information is attached with the lane identification information, and the processor 11 can therefore refer to the probe information 324 of the storage device 320 of the server 300 to sort the first information using the lane identification information as a key. This allows the processor 11 to acquire the first information in which the attribute information, the acquisition condition, and the degree of reliability are associated with the lane identification information. The first information of the information illustrated in FIG. 2 also includes the first information of a subject vehicle B' based on the past travel history. The first information of the subject vehicle B, which is currently traveling, is also sequentially transmitted to the server 300.

The probe information 324 includes third information based on the detection information from the subject vehicle B which is the target of travel control.

The processor 11 acquires the third information. The third information is information regarding the surrounding travel environment including a travel lane that is the lane in which the subject vehicle travels, which information is based on the detection information from a sensor equipped in the subject vehicle. Similar to the first information, the third information includes the attribute information of the vehicle, the acquisition condition of the detection information, and the degree of reliability of the detection information. The content of the attribute information, acquisition condition, and degree of reliability is the same as that of the first information. The attribute information of the vehicle, the acquisition condition of the detection information, and the degree of reliability of the detection information in the first information can be compared with the attribute information of the vehicle, the acquisition condition of the detection information, and the degree of reliability of the detection information in the third information. That is, the attribute information of the vehicle in the first information can be compared with the attribute information of the vehicle in the third information to calculate a degree of commonality. A determination may be made as to whether or not each item (manufacturer, vehicle type, year model) of the attribute information matches, and a score may be given to the matching of each item to calculate the degree of commonality. Additionally or alternatively, the difference of each item (number of sensors, layout of sensors, accuracy of sensors) of the attribute information may be obtained, and the difference of each item may be weighted to calculate the degree of commonality. Likewise, a score may be calculated based on the matching or difference of each item of the acquisition condition to calculate the degree of commonality of the acquisition condition. The third information of the subject vehicle B, which is currently the control target, is not used for being composited with the first information.

The third information includes lane identification information for specifying the lane. The first information also includes the lane identification information. The processor 11 can extract the first information corresponding to the travel lane of the subject vehicle using the lane identification information included in the third information. The first information and the third information include the position of an object around the travel lane. From the viewpoint of extracting the first information of another vehicle with similar detection accuracy to that for the subject vehicle, the detection results of the same object may be compared with each other to extract the first information. For example, the first information belonging to a value range based on the third information may be extracted. The processor 11 uses the first information whose degree of commonality with the third information, attribute, and/or acquisition condition are not less than respective predetermined thresholds, for generation of the travel environment information. From another viewpoint, the detection information regarding the same object (e.g., a sign whose position/shape is specified) is analyzed, and when the third information belongs to a predetermined range of standard deviation, the first information may be used for generation of the travel environment information. This allows the first information to be extracted which matches the situation of the travel lane in which the subject vehicle actually travels, and the travel environment information can be obtained using such first information. This scheme will be described later.

The second information will then be described.

In the generation of the travel environment information, the processor 11 refers to the second information. In one or more embodiments of the present invention, the processor 11 refers to the map information 21 stored in the storage device 20 to acquire the second information regarding lanes of a road. The map information referred to for acquiring the second information may be the map information 21 of the travel environment information generation apparatus 100, the map information 321 of the server 300, or the map information 241 of the onboard apparatus 200.

The second information is information regarding lanes of a road. The second information includes identification information for identifying one target lane from a plurality of lanes of a road. The second information includes lane marker information of each lane of a road. The lane marker information of each lane refers to information on the position, form, or attribute of the lane marker. The second information is a part or all of the map information 21.

The storage device 20 according to one or more embodiments of the present invention stores the map information 21, lane information 22, and traffic regulation information 23. The map information 21 is high-definition digital map information (high-definition map, dynamic map). The map information 21 according to one or more embodiments of the present invention is used in the driving control process executed by the driving control apparatus 400. The map information 21 has two-dimensional information and/or three-dimensional information.

In one or more embodiments of the present invention, a form in which the map information 21 is stored in the storage device 20 of the travel environment information generation apparatus 100 will be described, but the map information 21 may be stored in the storage device 240 of the onboard apparatus 200, the storage device 320 of the server 300 which is readable/writable via the communication device 30, or the storage device 420 of the driving control apparatus 400. FIG. 1 illustrates pluralities of map information pieces (21, 241), lane information pieces (22, 242), and traffic regulation information pieces (23, 243), but at least one of these can be configured in an accessible state.

When one road includes a plurality of lanes, identification information is provided for identifying one target lane from these lanes. Each lane is specified by positional information (map coordinate values) such as latitude/longitude, and which lane (N-th) the lane is may be specified using the identification information. When a plurality of lanes belongs to a road, each lane and the road to which the lane belongs are associated with each other by the identification information. The map information 21 has the identification information for specifying each single lane and connection destination lane information for identifying a connection destination lane of each lane.

The "lane" in one or more embodiments of the present invention is an area in which vehicles existing along the extending direction of a road can travel. When a road has a plurality of lanes arranged in parallel, each "lane" can be identified by a difference in the position (coordinates) along the width direction of a road. The lane includes one or more links. A link is partitioned on the lane by nodes that are two end points separated in the extending direction of the lane. The links corresponding to lanes arranged in parallel on a road can be identified by the positions (coordinates) along the width direction of the road and by the positions (coordinates) along the extending direction of the road.

The map information 21 according to one or more embodiments of the present invention has identification information for specifying each lane and information for specifying the next consecutive lane. The map information 21 allows a reading process to be executed by the driving control apparatus 400. In the automated or autonomous driving control process, the driving control apparatus 400 can refer to the map information 21 thereby to autonomously move (drive) the vehicle along the target route and estimate the lane in which the vehicle travels.

The map information 21 includes the lane information 22. Each road included in the map information 21 is specified by the positional information (map coordinate values) such as latitude/longitude and also specified by the identification information for specifying the road. The lane information 22 includes road type information, road attribute information, width information of roads, road shape information (such as a curvature radius and an intersection structure), information on intersection points on roads (merging points, branching points), inbound/outbound information (up-line/down-line information) of roads, information on the number of lanes, information on the number of inbound lanes(up-direction lanes), information on the number of outbound lanes(down-direction lanes), and information on lane markers (boundaries) of roads (such as broken lines, solid lines, color, planting, guardrails, structure types, blocks, and lighting type displays). These information items are associated with the identification information of roads. The lane information 22 also includes lane type information (branching, merging, intersecting), lane attribute information (such as right turn lanes, left turn lanes, and straight lanes), width information of lanes, lane shape information (such as curvature radii and intersection structures), information on intersections (merging points, branching points) on lanes, inbound/outbound information inbound/outbound information (up-line/down-line information)of lanes, information on the number of adjacent lanes, information on the number of inbound lanes, information on the number of outbound lanes, and information on lane markers (boundaries) of lanes (such as broken lines, solid lines, color, planting, guardrails, structure types, blocks, and lighting type displays). These information items are associated with the identification information of lanes.

The map information 21 includes the traffic regulation information 23. The traffic regulation information 23 represents traffic rules on a route, such as STOP, NO PARKING/NO STOPPING, SLOW, and SPEED LIMIT, which vehicles must follow when traveling. The traffic regulation information 23 includes information on one-way traffic, entry prohibition, temporary stop, the priority relationship in traveling, whether or not the overtaking is permitted (whether or not the lane change to an adjacent lane is permitted), parking prohibition, parking permission, etc. Each rule is defined for each point (latitude, longitude), each link, and each lane. The traffic regulation information 23 may include information on traffic signals acquired from a device provided on the road side.

The control device 10 refers to the above-described map information 21 stored in the storage device 20 to acquire the second information regarding lanes of a road.

The second information is any one or more of information items of the positional information such as coordinate values of lane markers, information for identifying which forms of lines the lane markers have, such as solid lines, broken lines, and yellow lines, and information for identifying which forms of structures of traffic strips the lane markers have, such as curbstones, planting, and guardrails. The lane marker information is attached with the identification information of the position of each lane (N-th, right/left side). This allows the forms of lane markers of the N-th lane, the form of a lane marker on the right side of the lane, and the form of a lane marker on the left side of the lane to be specified. That is, the map information 21 includes, for each lane, information on a combination of lane markers, such as the lane marker on the left side being a solid line and the lane marker on the right side being a curbstone. Such information is stored for each lane as the second information.

The identification information of a travel lane of the first information and the identification information of a target lane of the second information corresponding to the travel lane can be associated with each other. From the identification information of the first information regarding one travel lane A, a travel lane (target lane) B on the map information corresponding to the travel lane A and the second information of the travel lane (target lane) B can be extracted. For example, the control device 10 specifies the road to which the travel lane for another vehicle to travel belongs (obtains the identification information of the road) on the basis of the positional information of the first information, the road guidance sign included in a captured image in the first information, the identification information of the target lane of the second information corresponding to the travel lane, or the like. The control device 10 further specifies the travel lane in which another vehicle travels (obtains the identification information of the travel lane) from the image of a line of preceding vehicles included in the captured image in the first information. The control device 10 reads the identification information of the travel road and the identification information of the travel lane from the lane information 22 stored in the storage device 20.

The processor 11 of the travel environment information generation apparatus 100 generates the travel environment information 24.

The processor 11 determines whether or not the lane associated with the first information and the lane associated with the second information are common. Whether or not the lanes are common can be determined based on the identification information attached to each lane. The first information is information regarding the surrounding travel environment including a travel lane that is the lane in which another vehicle travels, and includes information for identifying the travel lane. The second information is information regarding lanes of a road and includes information for identifying each lane. The processor 11 extracts the first information regarding a certain lane A from the probe information 324 and extracts the second information regarding the lane A from the map information 21.

The processor 11 calculates a difference regarding a common lane between the first information and the second information and composites the first information and the second information on the basis of the difference to generate the travel environment information 24. The travel environment information 24 according to one or more embodiments of the present invention is used in the travel control process including the automated or autonomous driving.

The travel environment information 24 according to one or more embodiments of the present invention is generated (provided/formed) by compositing the first information and the second information. The first information is information regarding an actual and real environment (environment during the travel) detected by the detection device 220 of another vehicle. The second information is information regarding lanes acquired from the map information 21. The travel environment information 24 is information in which the first information and the second information are edited into one information piece and which can be referred to by the driving control apparatus 400.

Thus, the travel environment information 24 is generated by compositing the first information and the second information on the basis of the difference between the first information based on the detection information from another vehicle and the second information of the map information 21, and the travel environment information 24 can therefore be obtained with consideration for the actual situation. It is ideal that the shape of the travel lane of the first information and the shape of the travel lane in the map information of the second information match each other, but such a situation is rare. The first information based on the detection information from another vehicle is information that reflects the actual travel environment. By compositing the first information and the second information, it is possible to obtain the travel environment information 24 which reflects the actual environment of the travel lane in the map information having high consistency.

The first information based on the detection information from another vehicle is used, and the travel environment information 24 can therefore be obtained even when the third information based on the detection information from the subject vehicle is not acquired. Moreover, it is highly likely that a plurality of other vehicles travels in the same travel lane. The use of the detection information from a plurality of other vehicles allows more accurate first information and travel environment information to be obtained.

The processor 11 extracts, from the first information obtained from the accumulated probe information 324, information suitable as information representing the situation of the subject vehicle.

The processor 11 acquires the third information from the subject vehicle which is the target of autonomous travel control. As previously described, the third information is information regarding the surrounding travel environment including the travel lane of the subject vehicle, which information is based on the detection information from a sensor equipped in the subject vehicle. The processor 11 extracts the first information whose degree of commonality with the third information is a predetermined evaluation value or more. The processor 11 compares the lane identification information and/or the positional information included in the first information and the third information with each other and acquires the first information whose degree of commonality with the lane identification information and/or the positional information of the third information is a predetermined evaluation value or more. The positional information includes the position of the vehicle, the position of an object (object outside the vehicle), and the position of a lane mark. When the detection results of a plurality of first information pieces are statistically processed and the detection result of the third information is included within the standard deviation of the detection results, a determination can be made that the first information is highly accurate as alternative information of the third information. For example, when the position of a signal X (the same signal) included in a plurality of first information pieces detected by a plurality of other vehicles is statistically processed and the difference between the representative value and the position of the signal X detected by the subject vehicle is less than a predetermined value, a determination can be made that the degree of commonality between the first information and the third information is high. A determination can be made that the travel environment information based on such first information is highly accurate (the error from the third information is low), and the travel environment information can therefore be used as information useful for the autonomous traveling of the subject vehicle.

The third information is information regarding the travel environment of the travel lane of the subject vehicle, and the first information is information regarding the travel environment of the travel lane of another vehicle. The first information having a high degree of commonality with the third information can be estimated as information obtained from another vehicle that has traveled in the same travel lane as the travel lane of the subject vehicle or at the same or a nearby position in past times. That is, the extracted first information can be evaluated as information that accurately represents the travel scene of the subject vehicle. Although the first information is obtained from another vehicle, a determination is made that the first information is information suitable for the travel control of the subject vehicle, and the obtained first information and second information are composited to generate the travel environment information.

Thus, the travel environment information is generated using, among the first information pieces from other vehicles, the first information whose degree of commonality with the third information from the subject vehicle is a predetermined evaluation value or more, and it is therefore possible to generate the travel environment information reflecting the travel environment of the travel lane of the subject vehicle which is the travel control target. The accuracy of the detection information from one vehicle is limited. It may be difficult to determine whether or not the information is correct on the basis of the detection information obtained during one-time travel. In one or more embodiments of the present invention, the travel environment information is generated using a plurality of detection results (information pieces) from a plurality of other vehicles, and it is therefore possible to expand the detection range, confirm the certainty of the detection information, and obtain other advantages, which would be difficult only by the detection information from the subject vehicle. That is, it is possible to obtain detection information that exceeds the detection capability of a sensor of the subject vehicle.

In one or more embodiments of the present invention, the first information is made to include the attribute information of other vehicles, and the third information is made to include the attribute information of the subject vehicle. The processor 11 extracts the first information having the attribute information whose degree of commonality with the attribute information of the subject vehicle is a predetermined attribute evaluation value or more, and composites the extracted first information and the second information to generate the travel environment information. As described above, the attribute information of a vehicle includes vehicle identification information, manufacturer information of the vehicle, vehicle type information, model year information of the vehicle, layout information (including three-dimensional positional information) of sensors equipped in the vehicle, model type information of sensors equipped in the vehicle, the number of sensors equipped in the vehicle, and accuracy information of sensors equipped in the vehicle. These attribute information items are preliminarily given values on the basis of the commonality, and when the difference between the values is less than a predetermined value, a determination is made that the commonality is high.

Thus, the travel environment information is generated using, among the first information pieces from other vehicles, the first information having the attribute information whose degree of commonality with the attribute information of the third information from the subject vehicle is a predetermined attribute evaluation value or more, and it is therefore possible to generate the travel environment information reflecting the travel environment of the travel lane which is actually detected by another vehicle having a common attribute to that of the subject vehicle which is the travel control target.

In one or more embodiments of the present invention, the first information is made to include an acquisition condition when the first information is acquired, and the third information is made to include an acquisition condition when the third information is acquired. The processor 11 extracts the first information acquired under the acquisition condition whose degree of commonality with the acquisition condition of the third information is a predetermined acquisition evaluation value or more, and composites the extracted first information and the second information to generate the travel environment information. As described above, acquisition conditions are conditions when acquiring the detection information. The acquisition conditions include acquisition date and time and environment. The environment information as an acquisition condition includes the brightness at the time of acquisition, the weather at the time of acquisition, the rainfall amount at the time of acquisition, and the snowfall amount at the time of acquisition. For these acquisition conditions, values are preliminarily defined based on the commonality, and when the difference between the values is less than a predetermined value, a determination is made that the commonality is high. When the acquisition conditions are common, the accuracy of the first information can be evaluated high as the detection information of the subject vehicle, and the use of such first information allows highly reliable travel environment information to be obtained.

Thus, the travel environment information is generated using, among the first information pieces from other vehicles, the first information acquired under the acquisition condition whose degree of commonality with the acquisition condition when the third information from the subject vehicle is acquired is a predetermined acquisition evaluation value or more, and it is therefore possible to generate the travel environment information reflecting the travel environment of the travel lane which is actually detected by another vehicle having a common acquisition condition to that of the subject vehicle which is the travel control target.

In one or more embodiments of the present invention, the first information is made to include a degree of reliability of the first information. The processor 11 extracts the first information whose degree of reliability is a predetermined reliability evaluation value or more, and composites the extracted first information and the second information to generate the travel environment information. As described above, the degree of reliability includes the number of times of traveling in a lane for which the first information is specified, the number of times the travel environment information is generated, how the frequency distribution of detection results is low (how the variation is small), etc. For such degrees of reliability, values are preliminarily defined based on the degrees of reliability, and when the difference between the values is less than a predetermined value, a determination is made that the commonality is high.

Thus, the first information whose degree of reliability is the reliability evaluation value or more is extracted among the first information pieces from other vehicles, and the travel environment information is generated using the extracted first information; therefore, it is possible to generate highly reliable travel environment information that reflects the travel environment of the travel lane of the subject vehicle which is the travel control target.

The travel environment information 24 according to one or more embodiments of the present invention is generated by compositing the first information and the second information. The compositing process for the first information and the second information includes a connecting process, an integrating process, or a changing (modifying) process for the first information and the second information.

The connecting process is a process of connecting information regarding the travel lane included in the first information, information regarding an area including the travel lane, and information regarding lanes included in the second information or information regarding areas including the lanes (including map information) so that the continuity of information is maintained.

The integrating process is a process of assembling/aggregating/superimposing information regarding the travel lane included in the first information, information regarding an area including the travel lane, and information regarding lanes included in the second information or information regarding areas including the lanes (including map information) so that the continuity of information is maintained.

The modifying process is a process of changing the content of the first information or the second information or the content of the first information and the second information and changing/modifying any one of the first information and the second information on the basis of the first information or the second information. In one or more embodiments of the present invention, the first information based on the detection information may be evaluated as information that reflects the environment of the real space (information representing the travel environment which is approximate to the actual situation), and the content of the second information may be modified (changed) with reference to the first information.

In the compositing process, any one of the connecting process for the first information and the second information, the integrating process for the first information and the second information, and the modifying process may be executed, or a combination of two or more of the processes is executed. The compositing process is performed so that the continuity of the information regarding the travel lane is maintained. The first information and the second information are composited so that the position of the travel lane is not misaligned and the information on lane markers of the travel lane is not interrupted.

From the viewpoint of ensuring the continuity of the travel environment information generated by compositing the first information and the second information, the processor 11 composites the first information and the second information to generate the travel environment information so that the travel lane is connected to the target lane of the map information 21 corresponding to the travel lane. Ideally, the travel lane and the target lane have the same shape, and it is therefore expected that these lanes are connected smoothly. The connection between the travel lane and the target lane can ensure the continuity of the first information and the second information. The processor compares the coordinates of the first information including the travel lane with the coordinates of the map information 21 including the target lane to calculate a connection point between the travel lane and the target lane. When the connection point can be calculated, the travel lane and the target lane are connected to calculate a travel route. This travel route can be used as a movement route when the subject vehicle which is the control target is controlled to autonomously travel. The travel route is a route that includes a connection point of the travel lane and the target lane.

From the viewpoint of the continuity of the travel route in the travel environment information, the first information based on the detection information from a sensor of another vehicle and the second information based on the high-definition map information 21 can be appropriately composited. While referring to the map information 21, it is possible to obtain the travel environment information and the travel route which reflect the actual situation.

The travel route farther than the connection point (on the traveling direction side of another vehicle / along the traveling direction of another vehicle) may be the target lane based on the second information based on the map information 21 which is preliminarily prepared, and the travel route nearer than the connection point (on the detection position side of another vehicle) may be the travel lane of the first information based on the detection result from a sensor of another vehicle. By using the target lane of the map information 21 while considering the actual travel environment, it is possible to obtain the travel route from the acquisition position of the first information of another vehicle to the far side. It is possible to obtain a highly accurate travel route for controlling the subject vehicle to autonomously travel.

The processor 11 acquires the first information and the second information regarding a lane existing at a position farther than the travel environment which can be acquired based on the first information. The first information is obtained from the detection information from an onboard sensor of another vehicle. The detection range (distance) of the onboard sensor is finite, and the first information regarding the route at a separated position may not be obtained. On the other hand, the second information is the map information 21 which is preliminarily prepared, and it is possible to acquire the travel environment at a position separated from another vehicle. The processor 11 acquires the first information regarding the travel environment near another vehicle and the second information regarding the travel environment far from the other vehicle and composites the first information and the second information so that the travel lane and the target lane are connected to each other, thereby to obtain the travel environment information regarding the travel route from the near side to the far side. The travel lane and the target lane are connected to each other and, therefore, the first information based on the sensor detection information and the second information based on the high-definition accurate map information 21 can be composited while maintaining the continuity. It is possible to obtain an accurate travel route with reference to the map information 21 also for the far side while putting importance on the travel environment information which reflects the actual situation on the near side. The obtained travel route can be used as a route for the autonomous traveling of the subject vehicle.

The content of processes executed by the control device 10 will be described. The control device 10 composites the first information and the second information to generate the travel environment information 24. The generated travel environment information 24 may be stored in the storage device 20 or may also be stored in the storage device 20 of the onboard apparatus 200 which is accessible.

The compositing process for the first information and the second information will be described hereinafter.

The difference between the first information and the second information is calculated, and the first information and the second information are composited based on the difference. Both the first information and the second information include information regarding a common lane (the same lane), and the control device 10 composites the information pieces regarding the common lane. The source (information source) of the first information is the sensor detection information, and the source of the second information is the map information 21.

The processor 11 of the control device 10 calculates the difference regarding the common lane between the first information and the second information. The processor 11 composites the first information and the second information on the basis of the difference. The difference is an amount of misalignment between the first information and the second information.

The compositing process includes a process of connecting the travel lane of the first information and the target lane of the second information (lane on the map information corresponding to the travel lane). The compositing process includes a process of changing the second information on the basis of the first information. In one or more embodiments of the present invention, the detection information which is actually detected is prioritized, and the second information is modified (changed) with reference to the first information based on the detection information. The modifying (changing) process includes a process of shifting (modifying or changing) the position of the target lane of the second information with reference to the position of the travel lane of the first information.

The compositing process for the first information and the second information allows the first information and the second information to be integrated with each other, and the travel environment information 24 can therefore be generated using the first information and the second information. Even when the data number/data amount of any one of the first information and the second information is insufficient (small), the travel environment information 24 can be supplemented and generated using the other information item. The travel environment information 24 includes at least a travel lane (route). The travel lane included in the travel environment information 24 is a lane that reflects the actual environment.

The detection range of sensors including the detection device 220 is finite, and the first information is therefore information regarding a range (vicinity) of a predetermined distance from another vehicle. On the other hand, the second information is information based on the map information 21 and is information on a relatively wide range. In one or more embodiments of the present invention, the first information and the second information can be accurately composited (integrated) in the correct correspondence (including position matching). It is possible to calculate an appropriate travel route over a long route. When the autonomous traveling is executed based on this travel route, the driving plan can be prevented from being changed many times, and the control for smoothly moving the vehicle can be executed.

The compositing process (integrating process) includes a changing (modifying) process for the second information. The map information 21 regarding the second information can be changed (modified) based on the first information, and it is therefore possible to generate the travel environment information 24 which reflects the actual environment around another vehicle. In one or more embodiments of the present invention, it is assumed that the first information regarding the actual travel environment based on the detection information from another vehicle is "true" information. According to this assumption, the changing process for the second information based on the first information can be expressed as the modifying (correcting) process which follows the true information.

In one or more embodiments of the present invention, by changing (modifying) the second information on the basis of the first information based on the detection information, the travel control based on the travel environment information 24 which reflects the actually detected real environment can be executed. The travel control based on the travel environment information 24 in accordance with the actual environment is less likely to need the change or correction of the travel route, and it is therefore possible to suppress unnecessary steering and acceleration/deceleration. This can achieve reduction of the traveling time to the destination and reduction of the fuel consumption.

The control device 10 calculates the difference between the first information and the second information and composites the first information and the second information on the basis of the difference. The control device 10 composites the first information and the second information when the difference between the first information and the second information which are common in the target of information (lane/position) is a first threshold or more. When the difference is less than the first threshold, a determination is made that there is no need for compositing. Additionally or alternatively, the control device 10 composites the first information and the second information when the difference between the first information and the second information which are common in the target of information (lane/position) is less than a second threshold (>first threshold). This is because if the difference is not less than the second threshold, the first information and the second information may not be information regarding the same target (lane/position). The thresholds for evaluating the difference are appropriately defined in accordance with the accuracy of the first information and second information and the attribute of the road or lane (such as a highway or a narrow street).

The compositing process includes the connecting process for the first information and the second information. The source of the first information is the detection information from a sensor, and its range is therefore limited by the detection capability of the sensor. The source of the second information is the map information 21, and its range is therefore not limited. In the autonomous traveling, information on links to the destination is required. By connecting the first information and the second information, it is possible to obtain the travel environment information 24 in a range beyond the detection range of the sensor.

The compositing process includes the integrating process or superimposing process for the first information and the second information. The first information is information in the real space when another vehicle travels. The source (information source) of the first information is the detection information from a sensor, and it can therefore be expected that the first information reflects the actual situation more than the map information 21. The source of the second information is the map information 21 in which the measurement information pieces are matched based on the past measurement information and, therefore, the second information does not reflect the situation changes due to the attitude of the vehicle traveling and the temporary route change (such as due to the existence of an obstacle or construction). For smooth driving in the autonomous traveling, it is better to take into account the influence of the attitude of the subject vehicle, and the driving plan may have to be changed so as to move the subject vehicle along the changed route even for a temporary change. By integrating the first information and the second information, it is possible to execute the automated or autonomous driving control with consideration for both the map information 21 and the information on the real space detected by a sensor of another vehicle that actually travels.

If the detection condition is ideal and the situation of another vehicle matches the assumed model, the difference between the first information and the second information is small (e.g., less than the first threshold), and the automated or autonomous driving control is appropriately executed using the map information 21 even without compositing the first information and the second information. However, such a situation is rare, and the first information and the second information are therefore associated with each other to generate the travel environment information 24 in which the first information and the second information are composited. Although not particularly limited, when the difference between the first information and the second information is not less than the second threshold which is larger than the first threshold, the first information and the second information may be composited to generate the travel environment information 24. When the difference between the first information and the second information is not less than the second threshold, the compositing process, which includes any of the processes of connection, integration, and superposition, is performed to create new travel environment information 24. The created travel environment information 24 is stored in the storage device 20. The travel environment information 24 may be stored after being superimposed on the map information 21. The travel environment information 24 is used in the automated or autonomous driving control process executed by the driving control apparatus 400.

To perform high-level automated or autonomous driving in which a vehicle autonomously travels along a route without requiring human operation, it is necessary to accurately recognize the travel lane in the real space in which the vehicle currently travels, and accurately recognize the travel lane on the coordinates of the map information 21 which is used as the reference. The automated or autonomous driving control is based on the processes of recognition, determination, and operation. The accuracy of the recognition process affects the accuracy of the automated or autonomous driving control. In the recognition process, the accuracy is improved by accurately recognizing the actual state (accuracy of detection information) and accurately specifying the information (map information, link information) to be referred.

The control device 10 refers to the map information 21 to specify the target lane corresponding to the travel lane on the basis of the first information. The control device 10 connects the travel lane and the target lane of the map information 21 corresponding to the travel lane on the basis of the difference regarding a position between the first information and the second information. The control device 10 calculates the difference between the first information, which is the positional information of the travel lane, and the second information, which is the positional information of the target lane of the map information 21, and generates the travel environment information 24 by connecting the target lane, in which the positional difference from the travel lane is less than an identification threshold for identifying lanes, to the travel lane.

Additionally or alternatively, the second information may be modified so that the second information has the same value as that of the first information, and the first information and the second information may be composited. The second information is modified so as to match the first information. That is, the second information is changed so as to be identical to the first information. This allows the travel environment information 24 to be acquired to put importance on the actual detection information.

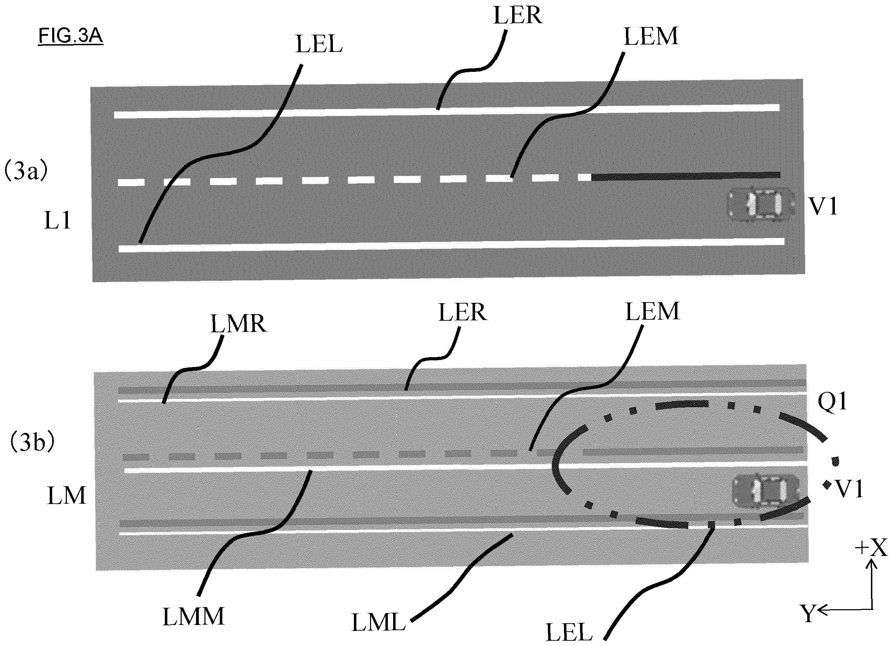

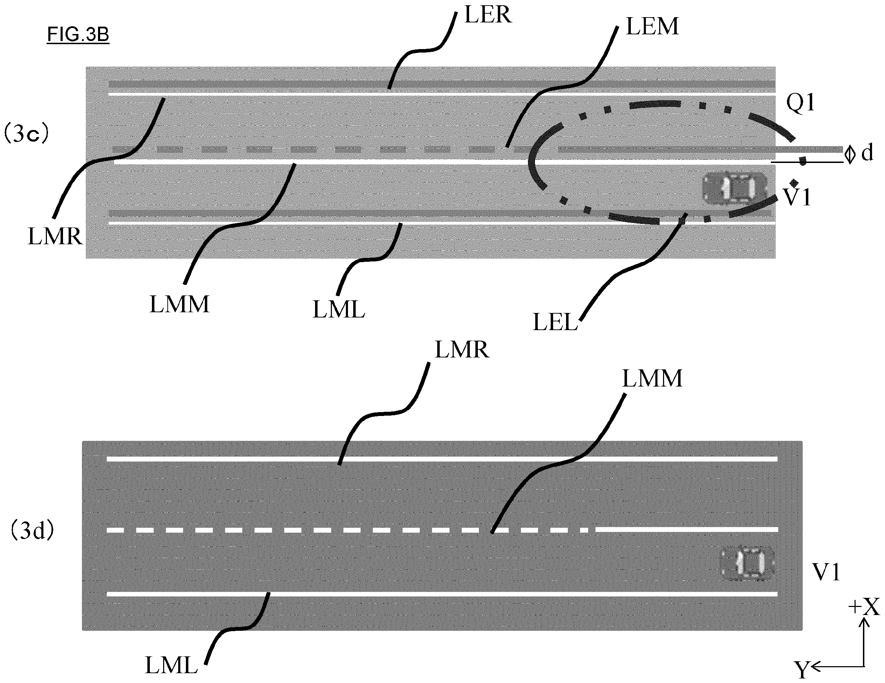

A scheme of the connecting process for the travel lane and the target lane will be described with reference to FIG. 3A and FIG. 3B.

The upper diagram (3a) of FIG. 3A illustrates a travel lane L1 in which a vehicle VI travels. The lane L1 is determined by the control device 10 on the basis of the detection information from the onboard apparatus 200 of the vehicle VI. The control device 10 recognizes that the travel lane L1 is a lane that is defined by a solid line lane marker LEL on the left side and a broken line lane marker LEM on the right side. This recognition process may be executed by the control device 410 of the driving control apparatus 400.

The lower diagram (3b) of FIG. 3A illustrates a target lane LM in the map information 21 corresponding to the travel lane L1. FIG. 3A(3b) illustrates lane markers of the target lane superimposed on the lane markers of the travel lane L1 illustrated in the diagram (3a). The control device 10 coordinate-converts the positional information of the travel lane L1 based on the detection information and the positional information of the target lane LM of the map information into common coordinates to calculate the difference. In FIG. 3A(3b), the lane markers (second information) of the map information 21 are indicated by relatively thinner lines than the lane markers (first information) based on the detection information. The control device 10 refers to the map information 21 to recognize that the target lane LM of the vehicle VI is a lane that is defined by a lane marker LML on the left side and a lane marker LMM on the right side.

As illustrated in the diagram (3c) of FIG. 3B, a distance d of misalignment occurs along the road width (Y direction in the figure) between the lane markers LEM and LEL of the travel lane L1 based on the detection information and the lane markers LMM and LML of the target lane LM of the map information 21. The travel lane L1 and the target lane LM are connected to composite the first information and the second information so that the distance d becomes zero. As illustrated in the diagram (3d) of FIG. 3B, the control device 10 shifts the lane markers LMR, LMM, and LML of the target lane LM along the +X direction by a distance corresponding to the distance d. The control device 10 generates the travel environment information 24 so as to include the second information thus changed and stores the travel environment information 24 in the storage device 20.

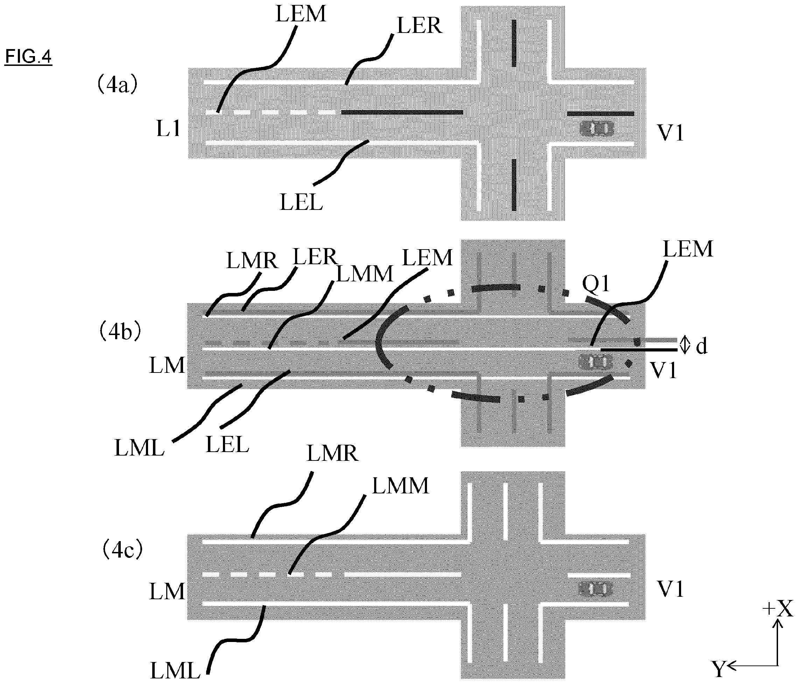

FIG. 4 is a set of diagrams for describing misalignment between the first information and the second information at an intersection. The diagram (4a) in the figure represents a travel lane L1 that is recognized based on the detection information. To recognize the state of the upper diagram (4a) of FIG. 4, not only the detection information but also the map information 21 may be referred to. The diagram (4b) is a diagram in which lane markers of a target road including a target lane LM corresponding to the travel lane L1 in the map information 21 are superimposed on lane markers of the travel lane L1 illustrated in the diagram (a). As illustrated in the diagram (4b), a distance d of misalignment occurs along the road width (X direction in the figure) between lane markers LEM and LEL of the travel lane L1 based on the detection information and lane markers LMM and LML of the target lane LM of the map information 21. In this example, the misalignment in the lateral position of the travel lane (misalignment in the X direction) is focused, but the positional misalignment in the traveling direction (misalignment in the Y direction), such as the position of an intersection in the traveling direction, may also be focused. As illustrated in the diagram (4c) of the figure, the control device 10 shifts the lane markers LMR, LMM, and LML of the target lane, which belong to the same road, along the +X direction by a distance corresponding to the distance d, and connects the travel lane and the target lane. The control device 10 composites the second information and the first information, the positions of which are changed, to generate the travel environment information 24. The generated travel environment information 24 is stored in the storage device 20.

In a scheme of compositing the first information and the second information, the control device 10 composites the first information of a first area including the travel lane and the second information of a second area including the target lane so that the travel lane and the target lane included in the map information 21 corresponding to the travel lane are connected. Additionally or alternatively, the control device 10 may connect an area including the travel lane and an area including the target lane. On the basis of the difference regarding the position between the first information and the second information, the control device 10 composites the first information and the second information so that the first area including the travel lane and the second area of the map information 21 including the target lane are connected.

The control device 10 calculates the difference between the first information and the second information and composites the first information and the second information on the basis of the calculated difference. The difference between the first information and the second information includes the difference in position between the travel lane in which another vehicle travels and the target lane. The first information is information on the actual space in which another vehicle travels, and the second information is information on a virtual (ideal) space defined in the map information 21. The difference between the first information and the second information is the misalignment of the state of the real space from the ideal state defined by the map information 21. The map information 21 is changed based on the difference to composite the first information and the second information and, therefore, the travel environment information 24 which reflects the state of the real space can be generated.

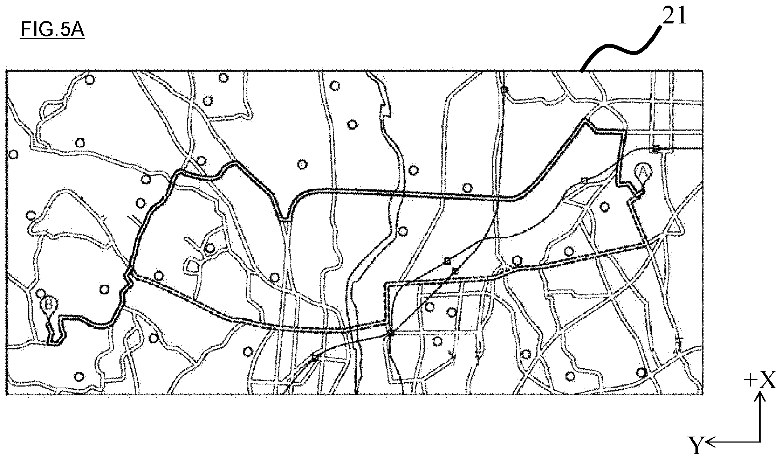

The outline of a scheme of generating the travel environment information 24 will be described with reference to FIG. 5A to FIG. 5C. In these figures, to describe the scheme of compositing the first information and the second information, detailed lanes are not illustrated for the sake of simplicity. In these figures, the reduction ratio of the map information 21 and the like also give priority to the convenience of description.

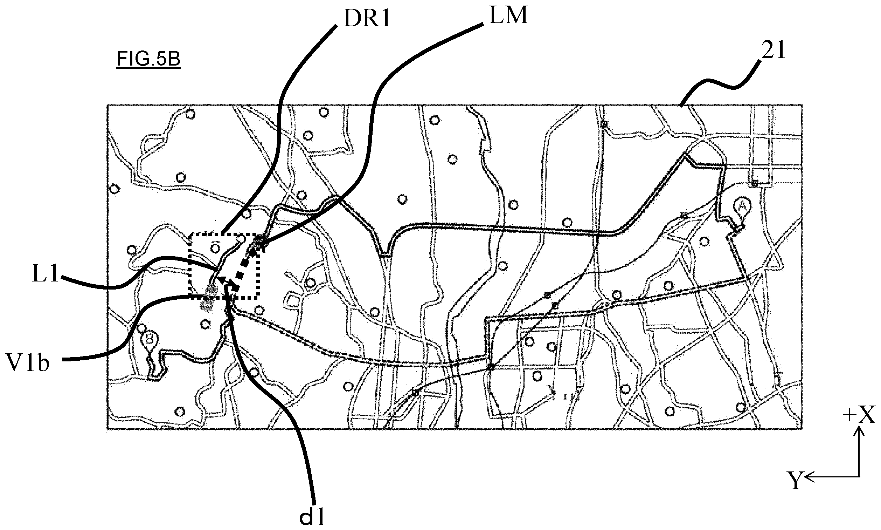

FIG. 5A illustrates an example of the map information 21. FIG. 5B illustrates the map information 21 including an acquisition position (V1b) at which the detection information is acquired from another vehicle V1b, a travel lane L1 based on the first information obtained from the detection information from the other vehicle V1b, and an area DR1 that represents a range in which the first information based on the detection information from the other vehicle V1b can be acquired. The range of the area DR1 differs depending on the accuracy of the detection device 220 and the like. A target lane LM corresponding to the travel lane L1 and extracted from the map information 21 is also illustrated. When a determination is made based on the positions, the travel lane L1 and the target lane LM are lanes that are relatively closest in distance or lanes between which the distance is less than a predetermined value. The figure illustrates a distance difference d1 between the travel lane L1 and the target lane LM. The control device 10 compares the first information based on the detection device 220 and/or the position detection device 231 equipped in the vehicle V1b with the second information regarding lanes stored in the map information 21 and calculates the distance difference d1. In the figure, to illustrate the acquisition position (V1b), the other vehicle V1b is illustrated on the map information 21. In the figure, one other vehicle V1b is illustrated for descriptive purposes, but the travel environment information generation apparatus 100 can concurrently acquire the first information from a plurality of vehicles.

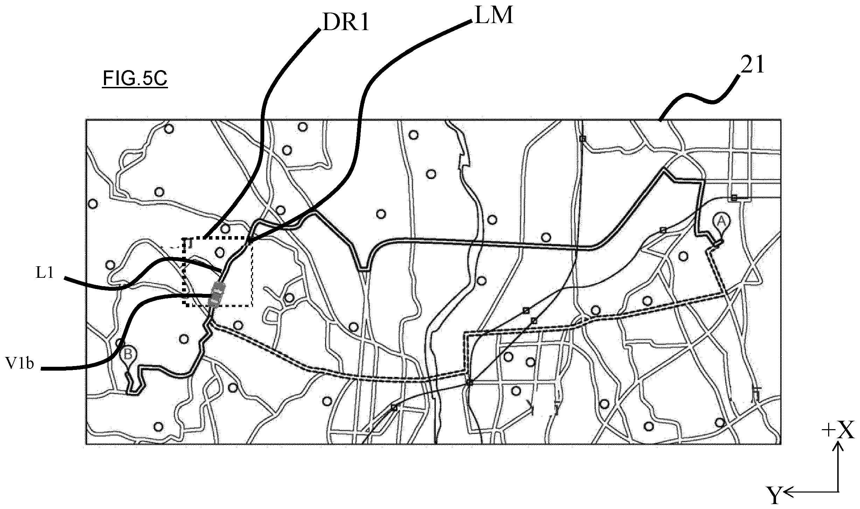

The control device 10 shifts either one or both of the travel lane L1 and the target lane LM in accordance with the distance difference d1 and connects these lanes. The control device 10 composites the first information and the second information on the basis of the difference d1 and the first information so that the target lane is connected to the travel lane. In one or more embodiments of the present invention, the first information based on the detection information is assumed to be the true information, and the second information is shifted (moved) based on the first information to align and composite the first information and the second information. As illustrated in FIG. 5C, the map information 21 of the second information is shifted in the coordinate XY directions by predetermined amounts on the basis of the previously calculated difference d1 so that the target lane LM is connected to the travel lane L1 in which the vehicle V1b travels. This process allows the travel environment information 24 to be generated in which the target lane LM of the map information 21 is connected to the travel lane L1. Not only the lane but also a predetermined area DR2 including the lane may be shifted.

The control device 10 changes the lane marker information of the target lane when generating the travel environment information 24. The lane marker information is included in the second information. As previously described, the lane marker information is information on the positions, forms, or attributes of lane markers. The second information includes identification information on the right side/left side of each lane and is represented by the positional information such as coordinate values of lane markers, information for identifying which forms of lines the lane markers have, such as solid lines, broken lines, and yellow lines, and/or information for identifying which forms of structures of traffic strips the lane markers have, such as curbstones, planting, guardrails, and road studs.

The process of generating the travel environment information 24 may be performed based on the first information which is acquired during the traveling in the travel lane in past times and accumulated as the travel history. The control device 10 may composite the first information and the second information to generate the travel environment information 24 on the basis of the first information, among the first information pieces, in which the number of times of traveling associated with the travel road is a predetermined number of times or more. The control device 10 may generate the travel environment information 24 on the basis of the representative value of the accumulated first information. The representative value may be any one of the average value, deviation value, median value, and value that appears most often of the detection information. The detection information may be affected by the environment such as the weather (rainfall, snowfall) when traveling, the road surface of a road, the time of day (late afternoon sun, dusk, headlights of other vehicles), and location (lights, neon signs). When the number of times other vehicles have traveled (the number of other vehicles that have transmitted the first information) is a predetermined number or more, that is, when the accumulated number of the stored first information is a predetermined number or more and the number of past records of traveling is large, the control device 10 can use the first information based on the detection information, which has been detected during the traveling of other vehicles, thereby to generate the travel environment information 24 while eliminating the influence of the environment. The history information including the number of times of traveling in the travel lane may be included in the detection information or may also be acquired from the navigation device 230 of each vehicle.

Thus, the travel environment information 24 is generated by compositing the first information and the second information on the basis of the difference between the first information based on the detection information from another vehicle and the second information of the map information 21, and the travel environment information 24 can therefore be obtained with consideration for the actual situation. It is ideal that the shape of the travel lane of the first information and the shape of the travel lane in the map information of the second information match each other, but such a situation is rare. The map information 21 can be modified based on the detection information and it is therefore possible to calculate the travel route in accordance with the actual road shape.

In one or more embodiments of the present invention, although not particularly limited, when a determination is made that the travel road including the travel lane of another vehicle in the first information is a predetermined specific road, the first information and the second information are composited to generate the travel environment information.

The control device 10 determines whether or not the travel road to which the travel lane belongs is a predetermined specific road, on the basis of the first information. The control device 10 specifies the travel road to which the travel lane belongs from the positional information of the first information and refers to the lane information 22 to extract the features of the travel road. On the basis of the captured image in the first information, the control device 10 extracts the features of the travel road to which the travel lane belongs from the number and forms of lane markers extracted from the image of lane markers captured ahead in the traveling direction on the road. The traveling direction in each lane is included in the lane information 22. On the basis of the captured image in the first information, the control device 10 extracts the features of the travel road to which the travel lane belongs from the image or the like of a line of vehicles captured ahead of another vehicle.

The control device 10 according to one or more embodiments of the present invention limits the scene/situation in which the process of generating the travel environment information 24 is performed. The control device 10 determines whether or not the travel road is a predetermined specific road, on the basis of the features of the travel road obtained based on the first information. When a determination is made that the travel road to which the travel lane of another vehicle in the first information belongs is a specific road, the control device 10 composites the first information and the second information to generate the travel environment information 24.

The control device 10 determines whether or not the travel road is a specific road that satisfies a predetermined condition, on the basis of the first information or the second information or on the basis of the first information and the second information. The predetermined condition which is a criterion for determining whether or not the road is a specific road is preliminarily defined.

In one or more embodiments of the present invention, the predetermined condition which defines the specific road is defined from the viewpoint of specifying a "unique lane." Although not particularly limited, examples of the definition of the specific road will be described below.

(1) The specific road can be defined as a road (travel road) in which the number of lanes belonging to the road is a predetermined number.

The larger the number of lanes belonging to one road, the more difficult it is to specify a unique lane. By defining the specific road on the basis of the number of lanes belonging to one road, it is possible to limit the situation/scene in which the unique lane is readily specified from among lanes belonging to the road. The number of lanes may be a limited numerical value or may also be represented by a numerical range defined by an upper limit and/or a lower limit.

Even in a case in which the travel road includes a plurality of lanes, when the number of lanes is a predetermined number, a determination can be made that the situation/scene is suitable for execution of the process of generating the travel environment information 24. The control device 10 generates the travel environment information 24 when traveling on the specific road suitable for generating the travel environment information 24 and can therefore generate the travel environment information 24 with a small difference from the actual environment.

The control device 10 uses the first information to calculate the number of lanes belonging to the road (travel road). On the basis of the captured image in the first information, the control device 10 can calculate the number of lanes from the number of lane markers of the travel road included in the captured image. The number of lanes can be calculated from the number of lines of other vehicles traveling ahead on the travel road included in the captured image in the first information. The control device 10 uses the second information to calculate the number of lanes belonging to the road (travel road). The second information includes the number of lanes of the road to which the target lane corresponding to the travel lane belongs. The control device 10 can use the first information and the second information to calculate the number of lanes belonging to the road (travel road). The number of travel lanes can be calculated by referring to the second information associated with the road in the map information corresponding to the travel road to which the detection position of the first information belongs.

(2) The specific road can be defined as a road in which the number of lanes in the inbound direction (up-direction) of the travel road is one and the number of lanes in the outbound direction (down-direction) of the travel road is one. The traveling direction in a lane can be identified using the first information or the first information and the second information. When belonging to a road in which the number of lanes in the inbound direction is one and the number of lanes in the outbound direction is one, a unique lane can be specified with a high degree of certainty. In other words, the specific road in this example is a road that includes a single inbound lane and a single outbound lane.

When the travel road of another vehicle includes only one lane on the road in the same traveling direction, a determination can be made that the situation/scene is suitable for execution of the process of generating the travel environment information 24. The control device 10 generates the travel environment information 24 on the basis of the first information when another vehicle travels on the specific road suitable for generating the travel environment information 24 and can therefore generate the travel environment information 24 with a small difference from the actual environment.

The control device 10 uses the first information to identify whether the road/lane is in the inbound direction or the outbound direction on the basis of the moving direction of another vehicle extracted from the change over time in the captured image included in the first information. The traveling direction (inbound or outbound direction / up or down direction) of a lane can be detected from the change over time in the acquisition position of the first information. The traveling direction (inbound or outbound direction / up or down direction) of a lane can be detected from the change over time in the captured image in the first information. The image is captured by the camera 221. The traveling direction (inbound or outbound direction / up or down direction) of a lane can be detected from the acceleration from the vehicle speed sensor 262.

On the basis of the captured image in the first information, the control device 10 calculates the number of lanes from the number of lane markers of the travel road included in the captured image and determines whether or not the number of lanes in the inbound direction and the number of lanes in the outbound direction are both one. The control device 10 calculates the number of lanes from the number of lines of other vehicles traveling ahead on the travel road included in the captured image in the first information and determines whether or not the number of inbound or outbound lanes is one.

The control device 10 can use the second information to determine whether or not the number of lanes in the inbound direction of the travel road and the number of lanes in the outbound direction of the travel road are both one. The second information includes the number of lanes of the road to which the target lane corresponding to the travel lane belongs. The second information includes information as to whether or not the target lane corresponding to the travel lane is included in a road in which the number of lanes in the inbound direction is one and the number of lanes in the outbound direction is one.

The control device 10 uses the first information and the second information to determine whether or not the number of lanes belonging to the road (travel road) is one. The number of travel lanes can be obtained by referring to the second information associated with the road of the map information corresponding to the travel road to which the acquisition position of the first information belongs, and a determination can be made as to whether or not the number of travel lanes is one.

(3) The specific road can be defined as a road in which the number of lanes in the inbound direction or outbound direction of the travel road is one. That is, the specific road is a road in which one lane in the inbound direction or the outbound direction is one-way. With the above-described scheme, the traveling direction of a lane can be identified using the first information or the first information and the second information. When the road is one-way, a unique lane can be specified with a high degree of certainty. When belonging to a road in which the number of lanes in the inbound direction is one or the number of lanes in the outbound direction is one, a unique lane can be specified with a high degree of certainty.

When the travel road of another vehicle is a road in which the number of lanes in the inbound direction or the outbound direction is one, a determination can be made that the situation/scene is suitable for execution of the process of generating the travel environment information 24. The control device 10 can generate the travel environment information 24 on the basis of the first information when another vehicle is traveling on the specific road suitable for generating the travel environment information 24 and can therefore generate the travel environment information 24 with a small difference from the actual environment.

With the above-described scheme, the control device 10 uses the first information to identify whether the road/lane is in the inbound direction or the outbound direction. With the above-described scheme, the control device 10 calculates the number of lanes using the first information and determines whether or not the number of lanes in the inbound direction or the outbound direction is one. Thus, the control device 10 identifies whether the road/lane is in the inbound direction or the outbound direction. The specific road of this example includes a single inbound or outbound lane.

With the above-described scheme, the control device 10 can use the second information to determine whether or not the number of lanes in the inbound direction or outbound direction of the travel road is one.

The control device 10 uses the first information and the second information to determine whether or not the number of lanes belonging to the road (travel road) is one. The number of travel lanes can be obtained by referring to the second information associated with the road of the map information corresponding to the travel road to which the acquisition position of the first information belongs, and a determination can be made as to whether or not the number of travel lanes is one.

(4) The specific road can be defined as a road in which the number of lanes of the travel road changes from two or more to one. Such a road is a road in which the number of lanes of the travel road is two or more at the detection position of another vehicle, but the lanes merge into a single lane at a position on the traveling direction side (along the traveling direction). When the number of lanes belonging to a road is one, it is easier to specify a unique lane than when the number of lanes is two or more. That is, even when the number of lanes of the travel road is two or more at the position (acquisition position) of another vehicle when acquiring the detection information, it can be expected that in a situation in which the number of lanes changes to one (two or more lanes merge into a single lane) at a position at which the other vehicle travels (position on the downstream side in the traveling direction), continuation of the traveling (elapse of time) makes a situation in which a unique lane is readily specified. Even when the number of lanes of the travel road is two or more, a determination can be made that the situation/scene suitable for execution of the process of generating the travel environment information 24 will be obtained, provided that the travel road is a road in which the number of lanes of the travel road changes from two or more to one on the downstream side. The control device 10 generates the travel environment information 24 on the basis of the first information when traveling on the specific road suitable for generating the travel environment information 24 and can therefore generate the travel environment information 24 with a small difference from the actual environment. For example, when the travel road on the upstream side of an intersection (or a merging point) includes two or more lanes, but the number of lanes changes from two or more to one after passing through the intersection, this travel road is specified as the specific road. The travel environment information 24 is generated based on the first information regarding such a specific road, and it is therefore possible to generate the travel environment information 24 with a small difference from the actual environment.

The control device 10 uses the first information to calculate the number of lanes belonging to the road (travel road). When a determination is made that the number of lanes at the detection position of another vehicle is two or more on the basis of the captured image in the first information and a determination is further made that the number of lanes will be one from the captured image of an area located ahead of the other vehicle (an area separated by a predetermined distance or more in the traveling direction from a position at which the other vehicle has obtained the detection information), the control device 10 determines that the information is obtained when the other vehicle is traveling on the specific road. The number of lanes can be determined based on the number of lane markers of the travel road extracted from the captured image (first information) of an area located ahead of another vehicle. The number of lanes can be determined based on the number of lines of vehicles traveling ahead extracted from the captured images of an area including the position at which the detection information is obtained (also referred to as a "detection position," hereinafter) and an area located ahead of the other vehicle.

The control device 10 refers to the second information to acquire the number of lanes belonging to the travel road including the detection position of the other vehicle and the number of lanes belonging to the travel road in an area separated by a predetermined distance or more in the traveling direction from the traveling position. The control device 10 can acquire information on the travel lane including the detection position and connection links connected to the travel lane on the basis of the detection position detected by the position detection device 231 and the lane information 22 of the map information 21. From the information on the connection links included in the lane information 22, the number of lanes of the travel road at the detection position and the number of lanes of the travel road at a point separated by a predetermined distance or more in the traveling direction from the detection position can be acquired. Even when the number of travel lanes including the detection position is two or more, a determination can be made that the first information is information acquired on a specific road, provided that the road is a road in which the lanes enter a single road after passing through the point at which the number of lanes changes (intersection/merging point).

The control device 10 uses the first information and the second information to acquire the number of lanes belonging to the travel road of another vehicle and the number of lanes belonging to the travel road in an area separated by a predetermined distance or more in the traveling direction from the current position (detection position/acquisition position) of the other vehicle. The number of the travel lanes of another vehicle can be calculated by referring to the travel road to which the acquisition position of the first information belongs and the second information regarding a road in the map information corresponding to the travel road to which the position separated by a predetermine distance in the traveling direction from the acquisition position (current position) of the first information belongs.

(5) The specific road can be defined as a road in which the number of lanes of the travel road is two or more and the travel road can be specified as to which lane of the lanes of the travel road the vehicle is traveling in, on the basis of the patterns of lane markers that define the lanes belonging to the travel road. For example, when two or more lanes belonging to a road are lanes having different forms (patterns) of lane markers, the travel lane can be specified based on the patterns of lane markers. The patterns of lane markers include a form of the right-side lane marker defining a lane, a form of the left-side lane marker, or a form of a combination of the right and left lane markers. For example, when a road includes a unique lane in which the lane marker on the right side is a yellow solid line and the lane marker on the left side is a broken line of a white line, the unique lane can be specified.

Even in a case in which the number of lanes of the travel road to which the acquisition position of the first information belongs is two or more, when the vehicle is traveling on a road in which it is possible to specify which lane the vehicle is traveling in on the basis of the patterns of lane markers, a determination can be made that the situation/scene is suitable for execution of the process of generating the travel environment information 24. The control device 10 generates the travel environment information 24 when a determination can be made that the vehicle is traveling on the specific road suitable for generating the travel environment information 24, and can therefore generate the travel environment information 24 with a small difference from the actual environment.

The control device 10 uses the first information to recognize the patterns of lane markers of a lane belonging to the road (travel road). On the basis of the captured image in the first information, the control device 10 can specify a lane from the patterns of lane markers of the travel road included in the captured image. The patterns of lane markers are extracted from the captured image. Lane markers are boundary lines (solid lines/broken lines), curbstones, planting, guardrails, road studs, etc. extending (scattered) in the traveling direction. The patterns of lane markers are represented by the type, color, and form of the lane markers. The control device 10 identifies the type of lane markers using a pattern matching process by comparing the image of a lane marker extracted from the captured image with a reference image pattern that is preliminarily stored.

The control device 10 uses the second information to recognize the patterns of lane markers of lanes belonging to the road (travel road). The second information includes the features of lane markers that define lanes. The features of lane markers are stored as the second information for each lane. The features of lane markers include the form of the lane markers (solid line, broken line, color) and the structure of the lane markers (traffic strip such as curbstone, planting, guardrail, or road stud). The features of lane markers include the features of a right-side lane marker and the features of a left-side lane marker for each lane. The patterns of lane markers are defined by the features of a pair of lane markers on the right and left of a lane. Even when the number of travel lanes is two or more, a unique lane can be specified with a high degree of certainty, provided that the features of lane markers of the lanes are different. Thus, by defining the specific road as a road in which the features of lane markers of two or more lanes belonging to one road are all different, it is possible to specify travel lanes in a state in which the unique lane is readily specified.

The control device 10 uses the first information and the second information to recognize the patterns of lane markers belonging to the travel road. The features on the image of lane markers of a lane belonging to the travel road are acquired from the captured image included in the first information. The patterns of lane markers of the travel lane are recognized by referring to the second information regarding a road of the map information corresponding to the travel road to which the acquisition position of first information belongs.

The patterns of lane markers of the travel lane can be recognized by referring to the second information associated with a road of the map information corresponding to the travel road to which the acquisition position of the first information belongs, and one lane can be specified based on the patterns of the lane markers.

When the road in the inbound direction or the outbound direction has two or more lanes, it may not be possible to extract the unique lane corresponding to the travel lane. The pattern of the right-side lane marker and the pattern of the left-side lane marker of a road including two or more lanes may be different.

(6) The specific road can be defined as a road in which the number of lanes in the inbound direction or the outbound direction of the travel road is two or more and it is possible to specify which lane of the two or more lanes of the travel road the vehicle is traveling in, on the basis of the patterns of lane markers that define the lanes in the inbound direction or the lanes in the outbound direction. For example, when two or more lanes belonging to a road in the inbound direction are lanes having different forms (patterns) of lane markers, or when two or more lanes belonging to a road in the outbound direction are lanes having different forms (patterns) of lane markers, the travel lane can be specified based on the patterns of lane markers.

Even in a case in which the number of lanes in the inbound direction or the outbound direction of the travel road to which the acquisition position of the first information belongs is two or more, when it is possible to specify which lane the vehicle is traveling in on the basis of the patterns of lane markers, a determination can be made that the situation/scene is suitable for execution of the process of generating the travel environment information 24. The control device 10 generates the travel environment information 24 when the first information is acquired on the specific road suitable for generating the travel environment information 24.

With the above-described scheme, the control device 10 uses the first information to identify whether the road/lane is in the inbound direction or the outbound direction. With the above-described scheme, the control device 10 recognizes the patterns of lane markers of the lanes belonging to the road (travel road) for each of the inbound direction and the outbound direction. The patterns of lane markers are as described above. On the basis of the captured image in the first information, the control device 10 can specify one lane from among the lanes in the inbound direction or the outbound direction on the basis of the patterns of lane markers of the travel road included in the captured image.

With the above-described scheme, the control device 10 can use the second information to recognize the patterns of lane markers of the lanes in the inbound direction or the outbound direction belonging to the road (travel road). The second information in this example includes information as to whether the road or each lane is in the inbound direction or the outbound direction.

With the above-described scheme, the control device 10 uses the first information and the second information to recognize the patterns of lane markers of the lanes in the inbound direction or the outbound direction belonging to the travel road. The patterns of lane markers of the travel lane can be recognized by referring to the second information associated with a road of the map information corresponding to the travel road to which the acquisition position of the first information belongs, and one lane can be specified based on the patterns of the lane markers. The second information in this case includes information as to whether the road or each lane is in the inbound direction or the outbound direction.

When the detection position of another vehicle belongs to a road with two or more oncoming lanes, it may not be possible to extract a unique target lane corresponding to the travel lane. In such a case, a determination is made as to whether or not the travel road is a specific road on the basis of the patterns of lane markers of the lanes in the inbound direction or the outbound direction.

(7) The specific road can be defined as a road in which the number of lanes in the inbound direction or the number of lanes in the outbound direction of the travel road is two or more and the lanes in the inbound direction or the lanes in the outbound direction are defined by predetermined characteristic lane markers. The characteristic lane markers include the forms of lane markers (solid lines, broken lines, color) and the structures of lane markers (traffic strips such as curbstones, planting, guardrails, and road studs). One lane can be specified when the lane has characteristic lane markers.

Even in a case in which a road has two or more lanes in the same traveling direction, when the lane markers of lanes are "predetermined lane markers," a determination can be made that the situation/scene is suitable for execution of the process of generating the travel environment information 24. A case will be discussed in which, for example, among the lane markers of two or more lanes in the inbound direction or the outbound direction, the lane marker on the most oncoming road side is planting and the lane marker on the outermost side (on the opposite side to the oncoming road) is a curbstone. In this case, the lane having the lane marker of planting can be specified as a unique lane on the most oncoming road side. In addition, the lane having the lane marker of a curbstone can be specified as a unique lane on the outermost side. The control device 10 generates the travel environment information 24 when traveling on the specific road suitable for generating the travel environment information 24, and can therefore generate the travel environment information 24 with a small difference from the actual environment.

With the above-described scheme, the control device 10 uses the first information to identify whether the road/lane is in the inbound direction or the outbound direction. With the above-described scheme, the control device 10 recognizes the patterns of lane markers of the lanes belonging to the road (travel road) for each of the inbound direction and the outbound direction. When the lane markers are defined by predetermined characteristic lane markers, one lane can be specified from among the lanes in the inbound direction or the outbound direction on the basis of the patterns of the lane markers of the travel road extracted from the captured image. The control device 10 can identify whether or not the captured lane markers are "predetermined characteristic lane markers" using a pattern matching process by comparing the image of lane markers extracted from the captured image with a reference image pattern of the "predetermined characteristic lane patterns" that is preliminarily stored. For example, there is a case in which among the lane markers of two or more lanes, the lane marker on the most oncoming road side is planting and the lane marker on the outermost side (on the opposite side to the oncoming road) is a curbstone. In this case, the lane having the lane marker of planting can be specified as a lane on the most oncoming road side and the lane having the lane marker of a curbstone can be specified as a lane on the outermost side.

With the above-described scheme, the control device 10 uses the second information to recognize the patterns of lane markers of the lanes in the inbound direction or the outbound direction belonging to the road (travel road). The second information in this example includes information as to whether the road or each lane is in the inbound direction or the outbound direction. The second information in this example includes information in which the features of lane markers and the identification information of lanes are associated with each other.

The control device 10 uses the first information and the second information to determine whether or not the lane markers of the lanes in the inbound direction or the outbound direction belonging to the travel road are the predetermined lane markers. The features of lane markers of the travel lane can be recognized by referring to the second information associated with a road of the map information corresponding to the travel road to which the acquisition position of the first information belongs, and one lane can be specified based on the lane markers being the "predetermined lane markers." The second information in this case includes information in which the features of lane markers are associated with the road or each lane.

When the detection position of another vehicle belongs to a road with two or more lanes, it may not be possible to extract a unique target lane corresponding to the travel lane. In such a case, a determination is made as to whether or not the travel road is a specific road on the basis of whether or not the lane markers of the travel lane are the predetermined lane markers.

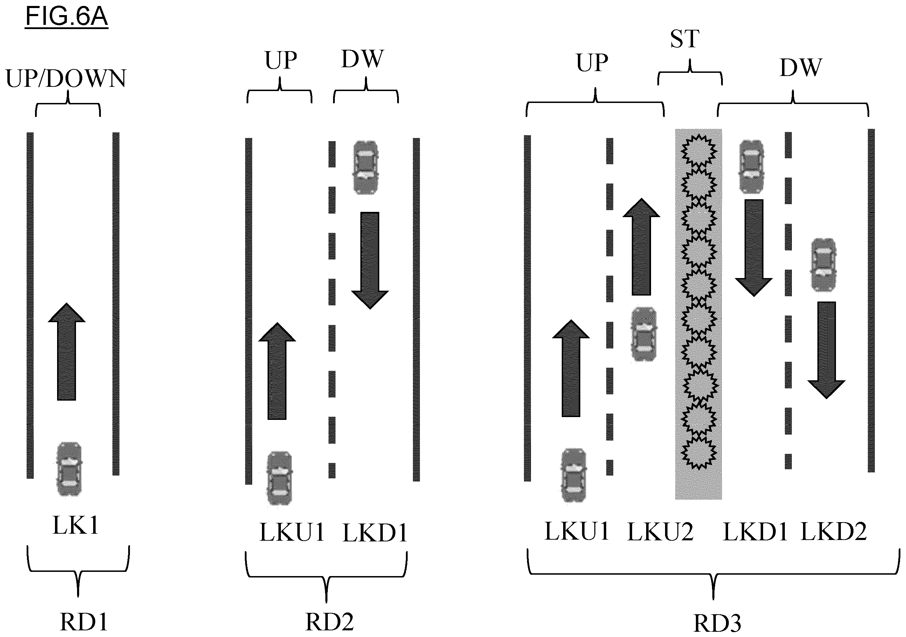

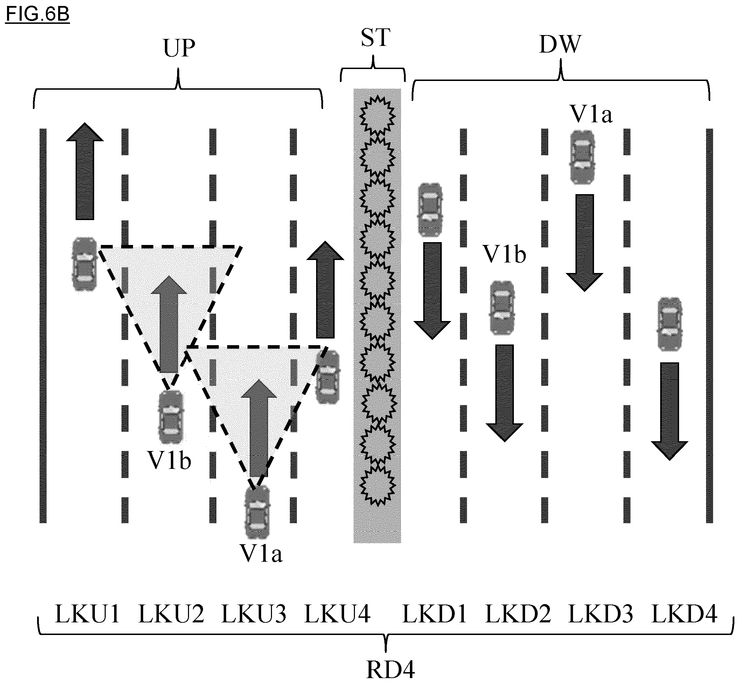

Examples of the above-described specific road will be described with reference to FIG. 6A and FIG. 6B.

RD1 illustrated in FIG. 6A represents a so-called one-way road, which is a road in which the number of lanes in the inbound direction (indicated by "UP") or the outbound direction (indicated by "DOWN" or "DW) is one. Lane LK1 is a unique lane on the road RD1. When the travel road is a specific road in which the number of lanes is one, the travel lane can be specified with a high degree of certainty on the basis of the detection information. Moreover, there are no lanes taken by mistake and it is therefore highly likely that the travel lane of the specific road in which the number of lanes is one is accurately associated with the target lane of the map information 21. When the travel environment information 24 is generated by compositing the first information and the second information, it is highly likely that the determined travel lane and the target lane are accurately matched while traveling on the specific road. The first information obtained while traveling on such a specific road allows the first information and the second information to be appropriately associated with each other, and it is therefore possible to generate the accurate travel environment information 24.

RD2 represents a road in which the number of lanes in the inbound direction and the number of lanes in the outbound direction are both one. Lane LKU1 is the lane in the inbound direction (or the outbound direction), and lane LKD1 is the lane in the outbound direction (or the inbound direction). As previously described, the traveling direction of a lane can be determined based on the first information and/or the second information. On a road in which the number of lanes in the inbound/outbound direction is one, the number of lanes along one traveling direction is limited to one, and the travel lane can therefore be specified with a high degree of certainty. When the number of lanes with a common traveling direction is one, there are no lanes taken by mistake and it is therefore highly likely that the travel lane and the target lane are accurately associated with each other. When the travel environment information 24 is generated by compositing the first information and the second information, it is highly likely that the travel lane of the first information and the target lane of the second information are accurately matched, provided that the first information is obtained while traveling on the specific road. The first information obtained while traveling on the specific road allows the first information and the second information to be appropriately associated with each other, and it is therefore possible to generate the accurate travel environment information 24.

RD3 represents a road in which the number of lanes in the inbound direction or the number of lanes in the outbound direction is two. The number of lanes may be two or more. Lanes LKU1 and LKU2 are the lanes in the inbound direction (or in the outbound direction), and lanes LKD1 and LKD2 are the lanes in the outbound direction (or in the inbound direction). Even when the traveling direction of a lane can be identified, there are two or more lanes along one direction, and it is not possible to identify a unique lane only by identifying the traveling direction.

Fortunately, however, when focusing on the combination of two lane markers that define a lane, combinations of lane marker forms of the lanes LKU1 and LKU2 are different as in the road RD3. The right-side lane marker of the lane LKU1 is a broken line, and the left-side lane marker of the lane LKU1 is a solid line. The right-side lane marker of the lane LKU2 is planting, and the left-side lane marker of the lane LKU2 is a broken line. On such a road, the combination patterns of two lane markers of the lanes LKU1 and LKU2 are different, and the lane LKU1 and the lane LKU2 can be identified based on the patterns of the lane markers.

The control device 10 defines the specific road as a road to which two or more lanes having different lane marker patterns belong. When the lane marker patterns of two or more lanes are different, the possibility of taking lanes by mistake is low, and it is therefore highly likely that the travel lane and the target lane are accurately associated with each other. When the travel environment information 24 is generated by compositing the first information and the second information, it is highly likely that the travel lane and the target lane are accurately matched, provided that the first information is obtained for use while traveling on the specific road. The first information obtained while traveling on the specific road allows the first information and the second information to be appropriately associated with each other, and it is therefore possible to generate the accurate travel environment information 24.

FIG. 6B illustrates an example in which common patterns of lane markers are included in some of two or more lanes belonging to a road.

The road illustrated in Figure 6B is a road with four lanes on each side. The road in the inbound direction and the road in the outbound direction are separated by planting, and lanes LKU4 and LKD1 existing on both sides of the traffic strip of planting have a predetermined pattern of lane markers that is one and only for each of the inbound direction and the outbound direction. On the other hand, in a four-links group UP in the inbound direction, links LKU2 and LKU3 each have broken line lane markers on both sides, and the patterns of the right and left lane markers are common.

On such a road RD4, even when traveling directions (UP/DW) can be recognized, in a case in which detected positions of vehicles include errors, the travel lanes of vehicles Via and V1b may not be accurately specified. When the travel lanes cannot be accurately specified, lanes are specified using the forms of lane markers. However, the links LKU2 and LKU3 of the four-links group UP in the inbound direction each have broken line lane markers on both sides, and the patterns (combinations) of the right and left lane markers are common, while also in four-links group DW in the outbound direction, links LKD2 and LKD3 each have broken line lane markers on both sides. The detection information regarding lane markers located ahead of the vehicle Via and the detection information regarding lane markers located ahead of the vehicle V1b are common and, therefore, the travel lane and the target lane may not be specified for any of the vehicles Via and V1b. Thus, it is inappropriate to define, as the specific road, a road in which two or more lanes having common traveling directions are included and each lane cannot be identified from the forms of lane markers.

Fortunately, however, when focusing on a predetermined characteristic lane marker (e.g., planting ST), lanes are defined by the planting ST, which is the predetermined characteristic lane marker, and the lane in the traveling direction UP is only the lane LKU4. When lanes are defined by a predetermined characteristic lane marker, one lane can be specified based on the characteristic lane marker. In the traveling direction DW, the lane having the characteristic lane marker (planting ST) among two or more lanes is only the lane LKD1. Thus, when the planting ST which is a characteristic lane marker and the traveling direction can be identified, the lane can be specified. Also when lanes are defined by a characteristic lane marker such as a guard rail or a curbstone, one lane can be specified. When the travel environment information 24 is generated by compositing the first information and the second information, it is highly likely that the determined travel lane and the target lane are accurately matched, provided that the first information is obtained while traveling on the specific road. The first information obtained while traveling on the specific road allows the first information and the second information to be appropriately associated with each other, and it is therefore possible to generate the accurate travel environment information 24.

The control device 10 recognizes the forms/patterns of lane markers of lanes, such as by a pattern matching process, on the basis of the image captured by the camera 221. The control device 10 recognizes the forms/patterns of lane markers of lanes on the basis of the radar reception signal from the radar device 222. Information on the forms/patterns of lane markers of each lane is stored as the second information of the map information 21 and, therefore, a lane can be specified based on the forms/patterns of lane markers from among two or more lanes that are narrowed down by the first information such as positional information.

As described above, the control device 10 generates the travel environment information 24 by compositing the first information and the second information only with the first information obtained when another vehicle is traveling on the specific road. The first information is information regarding the actual travel environment based on the detection information from a sensor of another vehicle. The second information is information regarding a road or a lane of the road based on the map information 21 which is preliminarily stored. Even when the map information 21 is high-definition map information, it is necessary to confirm the actual position on a road when the autonomous traveling is performed. This is because there are obstacles, road closures, traffic restrictions, etc. in the actual travel route and it cannot always be expected that the map information is correct. The first information based on the detection information and the second information based on the map information 21 are partly common but partly different. The driving control apparatus 400 according to one or more embodiments of the present invention refers to the first information and the second information to control the traveling of the vehicle.

The first information is information based on the detection information actually detected by another vehicle that actually travels, and the second information is the high-definition map information 21 which is preliminarily prepared. In the automated or autonomous driving control, the high-definition map information 21 is required. Even when the map information 21 is created in detail, if the travel lane in which the vehicle actually travels cannot be accurately specified, the map information 21 for incorrect lanes will be read, and the execution of accurate autonomous traveling will be hindered. For example, when the target lane of the map information 21 corresponding to the travel lane is specified based on the positional information acquired via the GPS, if the accuracy of the positional information is low, an incorrect target lane may be specified. For example, the accuracy of the GPS positional information also varies depending on the signal reception environment, and even when the reception environment is good, an incorrect target lane may be specified due to the systematic error (mechanical error). In particular, when there are two or more lanes adjacent to a road, an accurate travel lane may not be specified even with an error of less than 1 m.

The control device 10 generates the travel environment information 24 which reflects the actual situation. The control device 10 generates the travel environment information 24 by compositing the first information regarding the travel environment including the travel lane based on the detection information from a sensor of another vehicle and the second information regarding lanes in the map information 21. The control device 10 limits the first information for performing the compositing process so that no mismatch occurs in the compositing process. The control device 10 generates the travel environment information 24 on the basis of the first information, which is acquired when another vehicle is traveling on the specific road, and the second information.

The travel environment information 24 is generated when another vehicle is traveling on the specific road, and the first information and the second information can therefore be associated at the correct position. In other words, the first information acquired while traveling on the specific road can reduce the risk that the first information (detection information) and the second information (map information 21) are incorrectly associated (matched). As a result, it is possible to prevent an erroneous lane (map information 21) that does not correspond to the travel lane from being read to calculate an incorrect travel route and create an incorrect driving plan. The driving plan based on an incorrect travel route is changed (corrected) after execution. When the driving plan is changed, unnecessary steering and acceleration/deceleration are performed, so the occupants are given uncomfortable feeling. By changing (modifying) the second information on the basis of the first information based on the detection information from another vehicle, the travel control based on the travel environment information 24 which reflects the actually detected real environment can be executed. The travel control based on the travel environment information 24 in accordance with the actual environment is less likely to need the change or correction of the travel route, and it is therefore possible to suppress unnecessary steering and acceleration/deceleration. This can achieve reduction of the traveling time to the destination and reduction of the fuel consumption.

As described above, the control device 10 executes the process of generating the travel environment information 24 on the basis of the difference between the first information, which is acquired when another vehicle is traveling on the specific road, and the second information. The travel lane in the first information obtained when another vehicle is traveling on the specific road and the target lane corresponding to the travel lane are connected to composite the first information and the second information. The control device 10 specifies the target lane of the second information corresponding to the travel lane in the first information obtained when traveling on the specific road, calculates the content (range, value, direction) to be changed, and generates the travel environment information 24 in which the target lane is connected to the travel lane. The first information used for the process of generating the travel environment information 24 is limited and the first information and the second information are composited; therefore, it is possible to suppress matching errors and generate the travel environment information 24 which matches the actual situation.

Although not particularly limited, when a determination is made that the first information is information acquired while traveling on the specific road, the matching condition which associates the travel lane and the target lane with each other is relaxed. Although not particularly limited, the following schemes are conceivable for relaxing the matching condition. (1) The threshold of distance for evaluating the correspondence relationship between the first information and the second information may be changed so that the first information and the second information are readily associated with each other. (2) The threshold in the recognition process for lane markers may be changed to a threshold that allows the lane markers to be readily detected. (3) The threshold for evaluating the accuracy of the positional information obtained from the GPS may be changed to a threshold that allows the positional information to be readily adopted. For example, when the threshold is the number of satellites that can receive signals among a plurality of GPS satellites, the number of satellites is set to a small value. For example, regarding the condition that "when the number of satellites that can receive signals is 5 or less, the positional information is not used," this condition is changed to a condition that "upon traveling on the specific road, when the number of satellites that can receive signals is 4 or less, the positional information is not used." (4) Additionally or alternatively, regarding the condition that "no matching process is performed in an environment in which the accuracy of detection information is liable to be low," for example, regarding the condition that "no matching process is performed in an environment such as night, rainy weather, or snow," the condition is changed to a condition that "when traveling on the specific road, the matching process is performed even in an environment such as night, rainy weather, or snow. When another vehicle is traveling on the specific road, the condition regarding generation of the travel environment information is relaxed. Through this operation, in a travel environment in which another vehicle is traveling on the specific road and lane matching errors are less likely to occur, the threshold regarding the lane matching can be relaxed to reduce the calculation load and allow the smooth processing to be executed.

In one or more embodiments of the present invention, a road having two or more lanes common in the forms of lane markers is defined as not the specific road. Through this definition, in a case in which another vehicle is traveling on the specific road, even when a matching error of the travel lane occurs due to a determination based only on the detection position (current position) of the other vehicle, the target lane can be specified by the forms of lane markers of each lane, and the relationship (including the positional relationship) between the first information and the second information (map information 21) can be accurately associated.

In particular, regarding roads each having two or more lanes common in the traveling direction, a road having two or more lanes common in the forms of lane markers of the lanes is not defined as the specific road. Through this definition, even in a travel environment in which a matching error of the travel lane is likely to occur, the target lane can be specified by the forms of lane markers of each lane, and appropriate travel environment information 24 can be generated.

The control device 10 changes the lane marker information of the target lane when generating the travel environment information 24. The lane marker information is included in the second information. As previously described, the lane marker information is information on the positions, forms, or attributes of lane markers. The second information includes identification information on the right side/left side of each lane and is represented by the positional information such as coordinate values of lane markers, information for identifying which forms of lines the lane markers have, such as solid lines, broken lines, and yellow lines, and/or information for identifying which forms of structures of traffic strips the lane markers have, such as curbstones, planting, guardrails, and road studs. When the travel lane in the first information belongs to the specific road, that is, when the first information is acquired from another vehicle traveling on the specific road in which matching errors with the map information 21 are less likely to occur, the detection information in the first information is reflected in the second information.

In one or more embodiments of the present invention, when a determination is made that the travel road in the first information is the specific road, the lane marker information included in the second information of the target lane is changed based on the first information. The detection information regarding the lane markers acquired as the first information is reflected in the map information 21. Even in a case in which the lane markers are changed or other similar cases, the map information 21 can be updated over time.

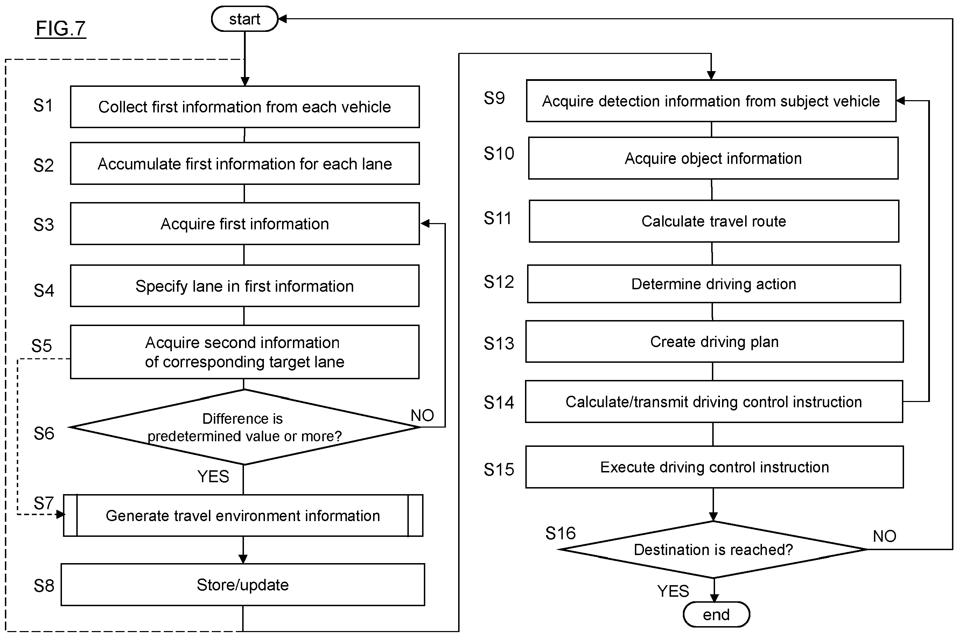

The processing procedure executed by the driving control system 1 according to one or more embodiments of the present invention will be described with reference to the flowchart of FIG. 7. As for the content of the process in each step, the above description will be borrowed herein, and the process flow will be mainly described.

First, in step S1, the processor 11 collects the detection information from a plurality of other vehicles into the server 300. The processor 11 may collect the first information based on the detection information. The processor 11 may transmit a command for the onboard apparatus 200 of each vehicle to send the detection information or the first information to the server 300. The first information includes information on the positions at which other vehicles acquire the detection information or the identification information of the travel lane. The first information to be collected may include any one or more of the vehicle attribute information, the acquisition condition of the detection information, and the degree of reliability of the detection information.

In step S2, the server 300 accumulates the first information as the probe information 324 under the control by the processor 11. The first information is stored such that the above-described detection information and first information are associated with the lane identification information and the positional information. The processor 11 can search the first information using the lane identification information and positional information as a key.

In step S3, the processor 11 acquires the first information for generation of the travel environment information. The trigger for starting the generation of the travel environment information is not particularly limited. The generation of the travel environment information may be started at the timing when the first information is accumulated by a predetermined amount or more, or the generation of the travel environment information may be executed every predetermined time. The processor 11 acquires the first information in a predetermined order. The first information detected along the route at points belonging to the route may be sequentially acquired, or the first information may be acquired in accordance with a predetermined rule.

Additionally or alternatively, the travel environment information may be generated with the timing when the subject vehicle starts the travel control as a trigger. When starting the travel control, the driving control apparatus 400 of the subject vehicle can request the travel environment information for reaching the destination to the travel environment information generation apparatus 100. Using the request as a trigger, the processor 11 may collect the first information in the travel lane to the destination of the subject vehicle and at each point belonging to the travel lane. By generating the travel environment information when the travel control of the subject vehicle is started, the travel environment information used for the automated or autonomous travel control can be preliminarily prepared when the automated or autonomous traveling of the subject vehicle is started.

When there are two or more first information pieces, information that satisfies a predetermined condition may be extracted from among the first information pieces.

In one or more embodiments of the present invention, when the travel environment information is generated for the automated or autonomous driving of the subject vehicle, it is preferred to use the first information which is approximate to the third information acquired by the subject vehicle. The processor 11 acquires the third information based on the detection information from a sensor equipped in the subject vehicle. The third information is information regarding the surrounding travel environment including the travel lane that is a lane in which the subject vehicle travels. The processor 11 extracts the first information whose degree of commonality with the third information is a predetermined evaluation value or more, and composites the first information and the second information to generate the travel environment information. In the first information, the first information whose degree of commonality with the attribute information of the subject vehicle, the acquisition condition of the detection information, or the degree of reliability of the detection information is a predetermined threshold may be used for generation of the travel environment information. In the first information, the first information whose reliability is a predetermined reliability evaluation value or more may be used for generation of the travel environment information. When there are a plurality of first information pieces, their representative value can be used as the first information. Additionally or alternatively, in the first information, the first information acquired within a predetermined period from the present time may be used.

In step S4, the processor 11 specifies a lane (travel lane of another vehicle) associated with the first information on the basis of the detection position at which the detection information deriving the first information is detected.

In step S5, the processor 11 specifies the target lane of the map information 21 corresponding to the lane of the first information and extracts the second information (map information 21) of an area that includes the target lane. The extracted second information may represent an area along the lane or a predetermined area including the lane.

In step S6, the processor 11 calculates the difference between the first information and the second information. The difference may be calculated by comparing characteristic points (such as traffic signals, signs, and positions of POIs), which are associated in the first information and the second information, with each other. Ideally, the first information and the second information regarding the same area match each other. In many cases, however, the position of an actual lane may not be the same as the map information 21, and a difference may occur between the first information and the second information. The processor 11 composites the first information and the second information on the basis of the difference so as to cancel the difference.

The processor 11 determines whether or not the difference is a predetermined value or more. When the difference is the predetermined value or more, the travel environment information is generated. When the difference between the first information and the second information is a first predetermined value or more, a determination is made that the difference between the first information and the second information may have to be modified, and the travel environment information is generated. Unlike this example, when the difference between the first information and the second information is a second predetermined value (>first predetermined value) or more, there is a possibility of the lane mismatch and, therefore, the travel environment information may not be generated. Step S6 can be skipped. The condition for generating the travel environment information can be appropriately defined.

In step S7, the processor 11 generates the travel environment information 24. The generated travel environment information 24 is stored/updated in the storage device 20. The previously described scheme can be used as the scheme of generating the travel environment information. To avoid duplicate descriptions, the above description will be borrowed herein.

In step S8, the processor 11 stores new travel environment information 24 each time the travel environment information 24 is generated, and updates the travel environment information 24 which has been previously generated and stored. In this operation, the calculated difference may be stored so as to be associated with the lane identification information. In the next process, only the difference can be read to generate the travel environment information 24.

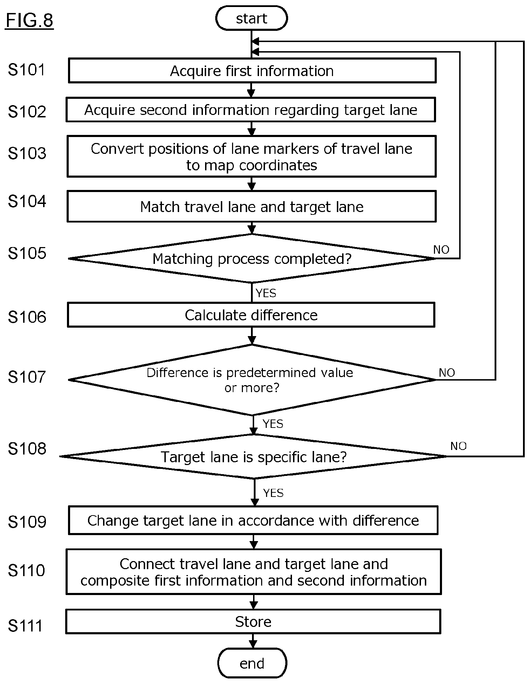

The process of generating the travel environment information 24 will be described with reference to the flowchart of FIG. 8.

In step S101, the processor 11 acquires the first information from another vehicle and accumulates the first information. This process corresponds to step S3 of FIG. 7.

In step S102, the processor 11 acquires the second information on the target lane corresponding to the travel lane of the first information.

In step S103, the processor 11 converts the lane markers of the travel lane into common coordinates. In step S104, the processor 11 matches the travel lane and the target lane at the common coordinates.

In step S105, the processor 11 confirms that the matching process between the travel lane from another vehicle and the target lane has been completed. When the distance between the travel lane and the target lane is less than a predetermined value, a determination is made that the matching has been completed. The matching between the travel lane and the target lane may be performed by comparison of the lane positional information, comparison of the lane identification numbers, comparison of the identification numbers or positions of the links or nodes included in the lanes, or other appropriate comparison. The point at which the positions are compared may be the position of a link defined in the second information of the target lane or the position of a node defining the link. The number of points at which the positions are compared may be one or may also be two or more. The processes of S101 and the subsequent steps are repeated until the matching process between the travel lane and the target lane is completed.

In step S106, the processor 11 compares the first information with the second information and calculates the difference. Specifically, the distance between the travel lane of the first information and the target lane of the second information is calculated as the difference between the first information and the second information.

In step S107, the processor 11 determines whether or not the difference in position between the travel lane and the target lane in the common coordinates is less than a predetermined value. The predetermined value is a value defined in accordance with the amount of misalignment between the first information and the second information (map information 21). When the difference of a value larger than the predetermined value is detected, the second information (map information 21) is changed in the compositing process. On the other hand, when the difference is less than the predetermined value, the process returns to step S101 to be performed. On the contrary, when the difference is less than the predetermined value, the travel environment information may not be updated. When the difference is the predetermined value or more, a determination is made that the compositing process is necessary, while when the difference is less than the predetermined value, a determination is made that the compositing process is unnecessary.

In another scheme of evaluating the difference, when a large difference of the predetermined value or more is detected, the degree of reliability of the difference is low, so the process may return to step S101 to be performed without performing the compositing process. On the other hand, when the difference is less than the predetermined value, the second information (map information 21) may be changed in the compositing process on the assumption that the difference may be an amount of misalignment between the first information and the second information.

Additionally or alternatively, in a scheme of evaluating the difference, when the difference is within a predetermined value range, the processes of step S108 and subsequent steps may be performed. When the amount of misalignment between the first information and the second information tends to fall within the predetermined value range as a result of analysis of the accumulated data, the predetermined value range may be defined based on the variance value range of the amount of misalignment.

In step S108, the processor 11 determines whether or not the travel road to which the travel lane of another vehicle belongs is a specific road. The above-described one or more definitions can be adopted as the definition of the specific road. The processor 11 limits the scene/state in which the first information and the second information are composited to generate the travel environment information 24. The processor 11 generates the travel environment information 24 only when the subject vehicle is traveling on the specific road. The processor 11 determines whether or not the travel road to which the travel lane belongs is a specific road. When the subject vehicle is traveling on the specific road, the following process of generating the travel environment information 24 is executed.

In step S109, the processor 11 changes (modifies) the position of the target lane of the second information in accordance with the difference.

In step S110, the processor 11 connects the end of the travel lane and the end of the target lane and composites the first information and the second information to obtain the travel environment information 24.

In step Sill, the processor 11 writes the travel environment information 24 in the storage device 20. The travel environment information 24 may be superimposed on the map information 21.

The process returns to the corresponding storage process of step S8 of FIG. 7.

The process then transitions to the driving control process.

In step S9, the processor 11 starts the autonomous travel control of the subject vehicle. If there is no request for the autonomous travel control of the subject vehicle, the process returns to step S1 and the process of accumulating the first information is repeated. The processor 11 acquires the detection information and the third information from the subject vehicle. The processor 11 calculates the current position of the subject vehicle which is traveling. The current position is determined based on the detection information including the GPS reception signals and the odometer information.

The processor 11 specifies the travel lane in which the subject vehicle travels, on the basis of the change over time in the current position of the subject vehicle. The travel lane may be specified by plotting the current position or may also be specified based on the current position and information extracted from the image captured by the camera 221. For example, the travel road may be specified based on text information such as road guidance.

The driving control processor 411 of the driving control apparatus 400 reads the latest travel environment information 24. In step S10, the driving control processor 411 acquires the detected object information. In step S11, the driving control processor 411 calculates a route for avoiding objects. In step S12, the driving control processor 411 determines the driving action at each point on the route. Examples of the driving action include "progressing," "steering," and "stopping." Examples of the driving action include those relating to the speed, acceleration, steering angle, deceleration, and rate of deceleration (deceleration acceleration).

In step S13, the driving control processor 411 creates a driving plan in which each point and the driving action are associated with each other over time. In step S14, the driving control processor 411 creates a driving control instruction for causing the vehicle to execute the driving plan. In step S14, the driving control processor 411 transmits the driving control instruction to the vehicle controller 280. In step S15, the driving control processor 411 causes the vehicle to execute the driving plan via the vehicle controller 280. The vehicle controller 280 executes the driving control on the basis of the created driving plan. In step S16, the driving control processor 411 executes the driving control until the destination is reached.

The driving of the vehicle is controlled based on the generated travel environment information 24, and it is therefore possible to perform the travel control in accordance with the actual environment acquired from the detection information. The travel environment information 24 is generated by the compositing process in which the travel lane and the target lane of the map information 21 are accurately associated with each other, so the control content calculated based on the travel environment information 24 is accurate and is not changed. As a result, smooth traveling is achieved without causing the vehicle to perform unnecessary steering and acceleration/deceleration.

Specifically, the driving control processor 411 calculates a target control value on the basis of an actual X-coordinate value (X-axis is the vehicle width direction) of the subject vehicle VI, a target X-coordinate value corresponding to the current position, and a feedback gain. The target control value relates to a steering angle, a steering angular speed, and other parameters necessary for moving the vehicle VI on the target X-coordinate value. The driving control processor 411 outputs the target control value to the onboard apparatus 200. The vehicle VI travels on the target route which is defined by a target lateral position. The driving control processor 411 calculates a target Y-coordinate value (Y-axis is the traveling direction of the vehicle) along the route. The driving control processor 411 compares the current Y-coordinate value and the vehicle speed and acceleration at the current position of the vehicle VI with the target Y-coordinate value corresponding to the current Y-coordinate value and the vehicle speed and acceleration at the target Y-coordinate value and calculates a feedback gain for the Y-coordinate value on the basis of the comparison results. The driving control processor 411 calculates a target control value for the Y-coordinate value on the basis of the vehicle speed, acceleration, and deceleration corresponding to the target Y-coordinate value and the feedback gain for the Y-coordinate value.

Here, the target control value in the Y-axis direction refers to a control value for each of the operation of drive mechanism (which includes the operation of an internal-combustion engine in the case of an engine car and the operation of an electric motor in the case of an electric car and may further include the torque distribution for an internal-combustion engine and an electric motor in the case of a hybrid car) and the braking operation to achieve the acceleration, deceleration, and vehicle speed corresponding to the target Y-coordinate value. For example, in an engine car, the control function serves to calculate a target amount of intake air (target opening degree of the throttle valve) and a target amount of fuel injection on the basis of values of the current and target acceleration, deceleration, and vehicle speed and send them to the drive device 290. Alternatively, the control function may serve to calculate the acceleration, deceleration, and vehicle speed and send them to the vehicle controller 280, which may calculate a control value for each of the operation of drive mechanism (which includes the operation of an internal-combustion engine in the case of an engine car and the operation of an electric motor in the case of an electric car and may further include the torque distribution for an internal-combustion engine and an electric motor in the case of a hybrid car) and the braking operation to achieve these acceleration, deceleration, and vehicle speed.

The driving control processor 411 outputs the calculated target control value in the Y-axis direction to the onboard apparatus 200. The vehicle controller 280 executes the steering control and drive control to operate the subject vehicle to travel on the target route which is defined by the target X-coordinate value and the target Y-coordinate value. The process is repeated every time the target Y-coordinate value is acquired, and the control value for each of the acquired target X-coordinate values is output to the onboard apparatus 200. The vehicle controller 280 executes the driving control instruction in accordance with the command from the driving control processor 411 until the vehicle arrives at the destination.

The travel environment information generation apparatus 100 according to one or more embodiments of the present invention is configured and operates as above, and the method of generating travel environment information which is used in the travel environment information generation apparatus 100 is executed as above; therefore, the following effects can be obtained.
(1) In the method of generating travel environment information according to one or more embodiments of the present invention, the first information based on the detection information from another vehicle is acquired, the second information is acquired by referring to the map information 21, the difference regarding a common lane between the first information and the second information is calculated, and the first information and the second information are composited based on the difference to generate the travel environment information; therefore, the travel environment information 24 can be obtained with consideration for the actual situation. It is ideal that the shape of the travel lane of the first information and the shape of the travel lane in the map information of the second information match each other, but such a situation is rare. The first information based on the detection information is information that reflects the actual travel environment. By compositing the first information and the second information, it is possible to obtain the travel environment information 24 which reflects the actual environment of the travel lane in the map information having high consistency.
   The first information based on the detection information from another vehicle is used, and the travel environment information 24 can therefore be obtained with consideration for the actual travel environment even when the detection information from the subject vehicle is not acquired. Moreover, it is highly likely that a plurality of other vehicles travels in the same travel lane. The use of the detection information from a plurality of other vehicles allows more accurate first information and therefore more accurate travel environment information to be obtained.
   The first information represents the actual space in which another vehicle travels, and the second information represents a virtual (ideal) space defined in the map information 21. The difference between the first information and the second information is the misalignment of the state of the real space from the ideal state defined by the map information 21. The map information 21 is changed based on the difference and, therefore, the travel environment information 24 which reflects the state of the real space can be generated.
(2) In the method of generating travel environment information according to one or more embodiments of the present invention, the third information based on the detection information from the subject vehicle is acquired, and the travel environment information is generated using, among the first information pieces from other vehicles, the first information whose degree of commonality with the third information from the subject vehicle is a predetermined evaluation value or more; therefore, it is possible to generate the travel environment information reflecting the travel environment of the travel lane of the subject vehicle which is the travel control target. The accuracy of the detection information from one vehicle is limited. It may be difficult to determine whether or not the information is correct on the basis of the detection information obtained during one-time travel. In one or more embodiments of the present invention, the travel environment information is generated using a plurality of detection results (information pieces) from a plurality of other vehicles, and it is therefore possible to expand the detection range, confirm the certainty of the detection information, and obtain other advantages, which would be difficult only by the detection information from the subject vehicle. That is, it is possible to obtain detection information that exceeds the detection capability of a sensor of the subject vehicle.
(3) In the method of generating travel environment information according to one or more embodiments of the present invention, the first information includes attribute information of another vehicle and the third information includes attribute information of the subject vehicle. The travel environment information is generated using, among the first information pieces from other vehicles, the first information having the attribute information whose degree of commonality with the attribute information of the third information from the subject vehicle is a predetermined attribute evaluation value or more, and it is therefore possible to generate the travel environment information reflecting the travel environment of the travel lane which is actually detected by another vehicle having a common attribute to that of the subject vehicle which is the travel control target.
(4) In the method of generating travel environment information according to one or more embodiments of the present invention, the first information includes an acquisition condition for another vehicle and the second information includes an acquisition condition for the subject vehicle. The travel environment information is generated using, among the first information pieces from other vehicles, the first information acquired under the acquisition condition whose degree of commonality with the acquisition condition when the third information from the subject vehicle is acquired is a predetermined acquisition evaluation value or more, and it is therefore possible to generate the travel environment information reflecting the travel environment of the travel lane which is actually detected by another vehicle having a common acquisition condition to that of the subject vehicle which is the travel control target.
(5) In the method of generating travel environment information according to one or more embodiments of the present invention, the first information includes a degree of reliability of the first information. The first information whose degree of reliability is a reliability evaluation value or more is extracted among the first information pieces from other vehicles, and the travel environment information is generated using the extracted first information; therefore, it is possible to generate highly reliable travel environment information that reflects the travel environment of the travel lane of the subject vehicle which is the travel control target.
(6) In the method of generating travel environment information according to one or more embodiments of the present invention, when a determination is made that the travel road to which the travel lane of another vehicle belongs is a predetermined specific road on the basis of the first information, the first information and the second information are composited to generate the travel environment information 24. The travel environment information 24 is generated using the first information in which the travel road to which the travel lane of another vehicle belongs is the specific road. By controlling (limiting) the first information used for the process of generating the travel environment information 24, the information on the real space detected by a sensor and the preliminarily stored map information 21 can be appropriately composited to generate the travel environment information 24 which reflects the situation of the real space.
   The travel environment information 24 is generated using the first information based on the detection information detected when another vehicle is traveling on the specific road, and the first information and the second information can therefore be associated at the correct position. In other words, when traveling on the specific road, the risk that the first information (detection information) and the second information (map information 21) are incorrectly associated (matched) is low. As a result, it is possible to prevent an erroneous lane (map information 21) that does not correspond to the travel lane from being read to calculate an incorrect travel route and create an incorrect driving plan.
(7) In the method of generating travel environment information according to one or more embodiments of the present invention, when a determination is made that the number of lanes belonging to the travel road is a predetermined number, a determination is made that the travel road is the specific road, and therefore whether or not the travel road is the specific road can be accurately determined based on the actually measured information and the preliminarily prepared information.
   In the method of generating travel environment information according to one or more embodiments of the present invention, the specific road is defined as a road in which the number of lanes is a predetermined number. The larger the number of lanes belonging to one road, the more difficult it is to specify a unique lane. By defining the specific road on the basis of the number of lanes belonging to one road, a state in which the unique lane is readily specified is defined. The number of lanes may be a limited numerical value or may also be a numerical value that defines a range. Definition may be made with a range such as a range of a predetermined number or less. In a scene of traveling on the specific road having a predetermined number of lanes, the first information and the second information can be accurately associated with each other. The process of generating the travel environment information 24 is executed under an environment in which the number of lanes is a predetermined number. By controlling (limiting) the first information used for the process of generating the travel environment information 24, the information on the real space detected by a sensor and the preliminarily stored map information 21 can be appropriately composited to generate the travel environment information 24 which reflects the situation of the real space.
(8) In the method of generating travel environment information according to one or more embodiments of the present invention, the specific road is defined as a road in which the number of lanes in the inbound direction is one and the number of lanes in the outbound direction is one. The specific road is defined as a road in which the number of lanes in the inbound direction or the outbound direction is one. The traveling direction in a lane can be identified in accordance with the first information such as a captured image. When the number of lanes belonging to a road in the same traveling direction is one, the first information and the second information can be accurately associated with each other. The process of generating the travel environment information 24 is executed under an environment in which the number of lanes in the same direction is one. By controlling (limiting) the first information used for the process of generating the travel environment information 24, the information on the real space detected by a sensor and the preliminarily stored map information 21 can be appropriately composited to generate the travel environment information 24 which reflects the situation of the real space.
(9) In the method of generating travel environment information according to one or more embodiments of the present invention, the specific road is defined as a road in which the number of lanes belonging to the road changes from two or more to one on the traveling direction side (along the traveling direction). Even in a case in which the travel road includes a plurality of lanes, when a determination is made that the number of lanes changes to one on the traveling direction side, it can be expected that the situation/scene is suitable for execution of the process of generating the travel environment information 24. The control device 10 generates the travel environment information 24 on the basis of the first information acquired at the detection position at which the vehicle is planned to travel on the specific road suitable for generating the travel environment information 24, and it can therefore be expected that the travel environment information 24 is generated with a small difference from the actual environment.
(10) In the method of generating travel environment information according to one or more embodiments of the present invention, the specific road is defined as a road in which it is possible to specify which lane of the lanes of the travel road the vehicle is traveling in, on the basis of the patterns of lane markers that define two or more lanes.
   Each lane marker is a boundary between two lanes on the right and left. The features of lane markers are stored for each lane. Even in a case in which the number of lanes of the travel road is two or more, when the features of lane markers of each lane are different, the unique lane can be specified with a high degree of certainty. By defining the specific road as a road in which the features of all the lane markers of two or more lanes belonging to one road are different, the traveling situation or traveling position in which the unique lane is readily specified can be defined. For example, a road in which the features of lane markers of two or more lanes are all different can be defined as the specific road.
   The control device 10 generates the travel environment information 24 when it is expected that the vehicle travels on the specific road suitable for generating the travel environment information 24, and it can therefore be expected that the travel environment information 24 is generated with a small difference from the actual environment.
(11) In the method of generating travel environment information according to one or more embodiments of the present invention, the specific road is defined as a road in which the number of lanes in the inbound direction or the outbound direction is two or more and it is possible to specify which lane of the lanes of the travel road the vehicle is traveling in. For example, the specific road is a road in which the two or more lanes in the inbound direction or the outbound direction of the road have different lane markers. The control device 10 generates the travel environment information 24 when it is expected that the vehicle travels on the specific road suitable for generating the travel environment information 24, and it can therefore be expected that the travel environment information 24 is generated with a small difference from the actual environment.
(12) In the method of generating travel environment information according to one or more embodiments of the present invention, the specific road is defined as a road in which the number of lanes in the inbound direction or the number of lanes in the outbound direction of the travel road is two or more and the lanes in the inbound direction or the lanes in the outbound direction are defined by predetermined characteristic lane markers. In a road with two or more lanes on each side, the lane marker on the right side of a road including two or more lanes may be different from the lane marker on the left side. This is a case in which, for example, among the lane markers of two or more lanes, the lane marker on the most oncoming road side is planting and the lane marker on the outermost side (on the opposite side to the oncoming road) is a curbstone. In this case, the lane having the lane marker of planting can be specified as a unique lane on the most oncoming road side, and the lane having the lane marker of a curbstone can be specified as a unique lane on the outermost side.
   When the lane marker of a certain lane is a "predetermined lane marker" on a road with two or more lanes on each side, the position of the lane can be specified, and as a result, the unique target lane can be extracted. The target lane is selected based on the determination as to whether or not the travel lane (target lane) includes a "predetermined lane marker," and the unique target lane can therefore be specified by the features of the lane marker even when traveling on a road with two or more oncoming lanes. When the lane has a "predetermined lane marker," a determination is made that the environment is suitable for the process of generating the travel environment information 24, and the travel environment information 24 can be generated when traveling in such a travel lane (specific road); therefore, highly reliable travel environment information 24 can be generated.
(13) In the method of generating travel environment information according to one or more embodiments of the present invention, when the travel environment information is generated, the stored travel environment information 24 is updated. This can provide the latest travel environment information 24.
(14) In the method of generating travel environment information according to one or more embodiments of the present invention, the stored travel environment information is accessible via a communication network. The driving control apparatus 400 of each vehicle can access the storage device 20 to refer to the travel environment information 24. The travel environment information 24 can be managed in an integrated fashion and shared by the driving control apparatuses 400 of a plurality of vehicles.
(15) In the method of generating travel environment information according to one or more embodiments of the present invention, the second information may be modified so that the second information has the same value as that of the first information, and the first information and the second information may be composited. The second information is modified so as to match the first information. That is, the second information is changed so as to be identical to the first information. This allows the travel environment information 24 to be acquired to put importance on the actual detection information.
(16) In the method of generating travel environment information according to one or more embodiments of the present invention, the second information is changed so that the travel lane and the target lane are connected. The travel lane detected in the real space in which another vehicle exists and the virtual target lane defined in the map information 21 can be connected. The travel environment information 24 can be generated which reflects the first information in which the real space is reflected.
(17) In the method of generating travel environment information according to one or more embodiments of the present invention, the second information regarding an area including the target lane is changed on the basis of the difference so that the target lane is connected to the travel lane. The second information regarding the area including the target lane includes information on the position, range, shape, radius of curvature of the target lane, the position and range of the area including the target lane, or information on other lanes. The area of the first information including the travel lane detected in the real space in which another vehicle exists, and the area including the virtual target lane defined in the map information 21, can be connected at the correct position. The travel environment information 24 can be generated which reflects the first information regarding the travel lane determined in the real space.
(18) In the method of generating travel environment information according to one or more embodiments of the present invention, when a determination is made that the travel road is the specific road, the condition for associating the travel lane and the target lane with each other is relaxed. In a travel environment in which another vehicle is traveling on the specific road and lane matching errors are less likely to occur, the threshold regarding the lane matching can be relaxed to reduce the calculation load and allow the smooth processing to be executed.
(19) In the method of generating travel environment information according to one or more embodiments of the present invention, when the travel road is the specific road, the lane marker information associated with the target lane of the second information is changed based on the first information. The map information 21 can reflect the detection information regarding the lane markers that is actually acquired when another vehicle travels. The map information 21 can be updated over time, such as when the lane markers are changed.
(20) In the driving control method according to one or more embodiments of the present invention, the driving of the vehicle is controlled based on the generated travel environment information 24, and the traveling can therefore be achieved in accordance with the determination based on the detection information under the actual environment. According to the method of generating travel environment information in one or more embodiments of the present invention, the first information and the second information are composited in a timely manner on the basis of the first information based on the actual situation around another vehicle and, therefore, the travel environment information which reflects the actual situation can be generated while referring to the map information 21. In the automated or autonomous driving control, the driving/behavior of the subject vehicle is autonomously controlled based on the actual detection information from the detection device 220 and vehicle sensor 260 equipped in another vehicle. By changing/modifying the map information 21 in accordance with the detection information and compositing the first information and the second information, it is possible to appropriately specify the route and achieve the smooth autonomous traveling. The control content does not change due to the difference between the actual travel lane and the target lane of the map information 21, and the smooth traveling can be performed.
   The driving plan based on an incorrect travel route is changed (corrected) after execution. When the driving plan is changed, unnecessary steering and acceleration/deceleration are performed, and the occupants may be given uncomfortable feeling. In one or more embodiments of the present invention, by changing (modifying) the second information on the basis of the first information based on the detection information, the travel control based on the travel environment information 24 which reflects the actually detected real environment can be executed. The travel control based on the travel environment information 24 in accordance with the actual environment is less likely to need the change or correction of the travel route, and it is therefore possible to suppress unnecessary steering and acceleration/deceleration. This can achieve reduction of the traveling time to the destination and reduction of the fuel consumption.
(21) In the driving control method according to one or more embodiments of the present invention, the travel route including the connection point between the travel lane and the target lane is calculated based on the travel environment information in which the first information and the second information are composited in a timely manner so that the travel lane and the target lane of the map information corresponding to the travel lane are connected. The subject vehicle is controlled to travel on the basis of the travel route in which the travel lane of another vehicle based on the first information and the target lane based on the second information are connected at the connection point and, therefore, the driving control can be executed based on the travel environment information which reflects the actual situation while referring to the map information 21. Moreover, the same action and effect as those in the preceding paragraph can be obtained.
(22) In the driving control method according to one or more embodiments of the present invention, the first information and the second information regarding the lane existing at a position farther than surroundings of another vehicle according to the travel environment obtained by the first information are composited. That is, in this driving control method, the first information around another vehicle and the second information at a location (area on the destination side) farther than the first information are composited so that the travel lane and the target lane are connected. This allows the travel environment information to be calculated in which the first information around another vehicle and the second information on the far side as a destination are composited so that the travel lane and the target lane are connected. The travel route is a lane (route) in which the travel lane based on the first information and the target lane based on the second information are connected in series. By controlling the subject vehicle to travel along the travel route connected from the actual travel lane based on the detection information of a sensor to the target lane leading to the destination, the driving control can be executed with consideration for the travel environment on the far side while referring to the map information 21 and adapting to the actual travel environment. Moreover, the same action and effect as those in the one or more preceding paragraphs can be obtained.
(23) The travel environment information generation apparatus 100 according to one or more embodiments of the present invention exhibits the same action and effect as those of the above-described method of generating travel environment information.

Embodiments heretofore explained are described to facilitate understanding of the present invention and are not described to limit the present invention. It is therefore intended that the elements disclosed in the above embodiments include all design changes and equivalents to fall within the technical scope of the present invention.

### [Description of Reference Numerals]

- 1: Driving control system
- 100: Travel environment information generation apparatus, Server apparatus
- 10: Control device
- 11: Processor
- 20: Storage device
- 21: Map information
- 22: Lane information
- 23: Traffic regulation information
- 24: Travel environment information
- 30: Communication device
- 200: Onboard apparatus
- 210: Communication device
- 220: Detection device, Sensor
- 221: Camera
- 222: Radar device
- 230: Navigation device
- 231: Position detection device, Sensor
- 232: Storage device
- 240: Storage device
- 241: Map information
- 242: Lane information
- 243: Traffic regulation information
- 250: Output device
- 251: Display
- 252: Speaker
- 260: Vehicle sensor, Sensor
- 261: Steering angle sensor
- 262: Vehicle speed sensor
- 263: Attitude sensor
- 264: Brightness sensor
- 270: Lane-keeping device
- 280: Vehicle controller
- 290: Drive device
- 295: Steering device
- 300: Server
- 310: Control device
- 311: Processor
- 320: Storage device
- 321: Map information
- 322: Lane information
- 323: Traffic regulation information
- 324: Probe information
- 330: Communication device
- 400: Driving control apparatus
- 410: Control device
- 411: Driving control processor
- 420: Storage device
- 430: Communication device

## Claims

1. A method of generating travel environment information, the method being executed by a processor, the method comprising:
acquiring first information regarding a surrounding travel environment from another vehicle via a communication network, the first information being based on detection information from a sensor equipped in the other vehicle, the surrounding travel environment including a travel lane that is a lane in which the other vehicle travels;
associating identification information of the lane with the first information and accumulating the first information in a storage device;
referring to preliminarily stored map information to acquire second information regarding lanes of a road;
calculating a difference regarding a common lane between the first information and the second information; and
compositing the first information and the second information on a basis of the difference to generate the travel environment information.

2. The method of generating travel environment information according to claim 1, comprising:
acquiring third information regarding a surrounding travel environment including a travel lane that is a lane in which a subject vehicle travels, the third information being based on detection information from a sensor equipped in the subject vehicle;
extracting the first information whose degree of commonality with the third information is a predetermined evaluation value or more;
compositing an extracted first information and the second information to generate the travel environment information.

3. The method of generating travel environment information according to claim 2, wherein
the first information includes attribute information of the other vehicle,
the third information includes attribute information of the subject vehicle,
the method comprises extracting the first information having the attribute information whose degree of commonality with the attribute information of the subject vehicle is a predetermined attribute evaluation value or more; and
compositing an extracted first information and the second information to generate the travel environment information.

4. The method of generating travel environment information according to claim 2 or 3, wherein
the first information includes an acquisition condition when the other vehicle acquires the first information,
the third information includes an acquisition condition when the subject vehicle acquires the third information,
the method comprises extracting the first information acquired under the acquisition condition whose degree of commonality with the acquisition condition of the third information is a predetermined acquisition evaluation value or more and;
compositing an extracted first information and the second information to generate the travel environment information.

5. The method of generating travel environment information according to any one of claims 1 to 4, wherein
the first information includes a degree of reliability of the first information,
the method comprises extracting the first information whose degree of reliability is a predetermined reliability evaluation value or more; and
compositing an extracted first information and the second information to generate the travel environment information.

6. The method of generating travel environment information according to any one of claims 1 to 5, comprising
determining whether or not a travel road including the travel lane of the other vehicle in the first information is a predetermined specific road and, when a determination is made that the travel road is the specific road, compositing the first information and the second information to generate the travel environment information.

7. The method of generating travel environment information according to claim 6, comprising,
when a determination is made that the number of lanes belonging to the travel road is a predetermined number, determining that the travel road is the specific road.

8. The method of generating travel environment information according to claim 6 or 7, comprising,
when a determination is made that the number of lanes in an inbound direction and/or an outbound direction of the travel road is one, determining that the travel road is the specific road.

9. The method of generating travel environment information according to claim 6 or 7, comprising:
acquiring a change in the number of lanes on a traveling direction side of the travel lane; and
when a determination is made that the number of lanes changes from two or more to one, determining that the travel road is the specific road.

10. The method of generating travel environment information according to claim 6 or 7, comprising,
when a determination is made that the number of lanes belonging to the travel road is two or more and the travel road can be specified as to which lane of the lanes of the travel road a vehicle is traveling in, on a basis of patterns of lane markers that define the lanes belonging to the travel road, determining that the travel road is the specific road.

11. The method of generating travel environment information according to claim 6 or 7, comprising:
acquiring the number of lanes belonging to the travel road; and
when a determination is made that the number of lanes in an inbound direction or an outbound direction of the travel road is two or more and it is possible to specify which lane of the lanes of the travel road a vehicle is traveling in, on a basis of patterns of lane markers that define the lanes in the inbound direction or the lanes in the outbound direction, determining that the travel road is the specific road.

12. The method of generating travel environment information according to claim 6 or 7, comprising:
acquiring the number of lanes belonging to the travel road; and
determining, as the specific road, the travel road in which the number of lanes in an inbound direction or the number of lanes in an outbound direction of the travel road is two or more and the lanes in the inbound direction or the lanes in the outbound direction are defined by predetermined characteristic lane markers.

13. The method of generating travel environment information according to any one of claims 1 to 12, wherein the travel environment information is updated when the travel environment information is generated.

14. The method of generating travel environment information according to any one of claims 1 to 13, wherein the travel environment information stored in the storage device is accessible via the communication network.

15. The method of generating travel environment information according to any one of claims 1 to 14, comprising
modifying the second information to composite the first information and the second information so that the second information has same value as that of the first information.

16. The method of generating travel environment information according to any one of claims 1 to 15, comprising
compositing the first information and the second information on the basis of the difference so that the travel lane and a target lane of the map information corresponding to the travel lane are connected.

17. The method of generating travel environment information according to any one of claims 1 to 16, comprising
compositing the first information and the second information on the basis of the difference so that a first area of the first information including the travel lane and a second area of the second information including a target lane corresponding to the travel lane are connected.

18. The method of generating travel environment information according to claim 16 or 17, comprising,
when the difference between the first information and the second information is less than a predetermined reference value, relaxing a condition for associating the travel lane of the first information and the target lane of the map information with each other.

19. The method of generating travel environment information according to any one of claims 16 to 18, comprising,
when the difference between the first information and the second information is less than a predetermined reference value, changing lane marker information on a basis of the first information, the lane marker information being associated with the target lane of the map information corresponding to the travel lane of the first information.

20. A driving control method comprising:
referring to the travel environment information obtained by the method of generating travel environment information according to any one of claims 1 to 19;
calculating a travel route of the subject vehicle on a basis of the travel environment information, the subject vehicle being a control target of autonomous traveling; and
causing the subject vehicle to travel along the travel route.

21. The driving control method according to claim 20, comprising:
compositing the first information and the second information to generate the travel environment information so that the travel lane of the first information and a target lane of the map information corresponding to the travel lane are connected; and
calculating, on the basis of the travel environment information, the travel route including a connection point between the travel lane and the target lane of the map information corresponding to the travel lane.

22. The driving control method according to claim 20, comprising:
acquiring the first information and the second information regarding the lane existing at a position farther than surroundings of the subject vehicle according to the travel environment obtained by the first information;
compositing the first information and the second information to generate the travel environment information so that the travel lane of the first information and a target lane of the map information corresponding to the travel lane are connected; and
calculating the travel route on the basis of the travel environment information.

23. A travel environment information generation apparatus comprising:
a communication device configured to perform communication with vehicles;
a storage device configured to store information; and
a processor configured to generate travel environment information,
the processor operating to:
acquire first information regarding a surrounding travel environment from a vehicle via a communication network using the communication device on a basis of detection information from a sensor equipped in the vehicle, the surrounding travel environment including a travel lane that is a lane in which the vehicle travels;
associate identification information of the lane with the acquired first information and accumulate the first information in the storage device;
refer to preliminarily stored map information to acquire second information regarding lanes of a road;
calculate a difference regarding a common lane between the first information and the second information; and
composite the first information and the second information on a basis of the difference to generate the travel environment information.
